# EUROPÄISCHE PATENTSCHRIFT

(11) **EP 2 836 756 B1**
(45) Veröffentlichungstag und Bekanntmachung des Hinweises auf die Patenterteilung: **23.09.2020**
(21) Anmeldenummer: 13710968.2
(22) Anmeldetag: 20.02.2013
(51) Int. Cl.: F16L 37/10, F16L 37/23, F16L 37/42, F16L 37/56

(54) **STECKANSCHLUSS SOWIE ZUFÜHRANSCHLUSSTEIL**
PLUG CONNECTION AND GUIDANCE CONNECTION PIECE
RACCORDEMENT ENFICHABLE AINSI QU'ÉLÉMENT DE RACCORDEMENT D'ALIMENTATION

(30) Priorität: 11.04.2012 EP 12163783; 13.09.2012 DE 202012008767 U
(43) Veröffentlichungstag der Anmeldung: 18.02.2015
(73) Patentinhaber: Lothar Schulz - Mechanik GmbH, 66450 Bexbach (DE)
(72) Erfinder: KEES, Ulrich, 66424 Homburg (DE)
(74) Vertreter: Wieske, Thilo
(86) Internationale Anmeldenummer: PCT/DE2013/100063
(87) Internationale Veröffentlichungsnummer: WO 2013/152756

(56) Entgegenhaltungen:
- EP-A2- 0 082 950
- EP-A2- 1 179 701
- WO-A1-80/01711
- DE-U1-202007 011 594
- US-A- 5 002 254
- US-A1- 2007 241 560

## Beschreibung

Die vorliegende Erfindung betrifft ein Zuführanschlussteil nach dem Oberbegriff des Anspruchs 1 sowie einen Steckanschluss nach dem Oberbegriff des Anspruchs 3.

Im Bereich der pneumatischen Antriebe ist es bekannt, beispielsweise in Werkhallen von Betrieben eine pneumatische Versorgungsleitung vorzusehen, die als Stammleitung geführt ist. Von dieser Stammleitung gehen Stichleitungen zu den einzelnen Arbeitsplätzen ab. Am Ende dieser Stichleitungen sind an den Arbeitsplätzen jeweils Zuführanschlussteile angebracht. Diese Zuführanschlussteile weisen ein Aufnahmeteil auf für ein Gegenanschlussteil. Dieses Gegenanschlussteil ist ein pneumatischer Stecker, der an einer zu einem pneumatischen Verbraucher führenden Leitung angeschlossen ist. Mittels dieses Gegenanschlussteils wird der pneumatische Verbraucher durch ein Einstecken in das Zuführanschlussteil mit der pneumatischen Versorgungsleitung verbunden.

Die Gegenanschlussteile der Verbraucher sind so ausgeführt, dass diese ein Rohrstück aufweisen, das an seiner Außenfläche eine ringförmige Nut aufweist, in die mechanische Blockademittel eingreifen können zur mechanischen Halterung des Gegenanschlussteils.

Die heute verbreiteten Zuführanschlussteile sind so aufgebaut, dass diese ein Rückschlagventil aufweisen. Durch dieses Rückschlagventil wird die pneumatische Versorgungsleitung gesperrt, wenn kein Gegenanschlussteil in die Aufnahmemittel des Zuführanschlussteils eingesteckt ist. Dieser verbreitete Stand der Technik bringt gewisse Probleme mit sich. Zum einen muss beim Einstecken eines Gegenanschlussteils in die Aufnahmemittel des Zuführanschlussteils das Gegenanschlussteil gegen den auf dem Rückschlagventil anstehenden Druck der pneumatischen Versorgungsleitung geöffnet werden. Dies erfordert eine vergleichsweise große Kraft bereits bei Leitungsquerschnitten von 1/4''.

Bei noch größeren Leitungsquerschnitten ist es durchaus üblich, vor dem Zuführanschlussteil nochmals einen Kugelhahn vorzusehen, über den zum einen die pneumatische Versorgungsleitung auf dem Teilstück zwischen dem Kugelhahn und dem Zuführanschlussteil von der pneumatischen Versorgung getrennt werden kann. Weiterhin ist ein Entlüftungsventil vorhanden zur Entlüftung dieses genannten Teilstücks. Durch das Entlüften wird das Einsetzen des Gegenanschlussteils in die Aufnahmemittel des Zuführanschlussteils erleichtert. Nach dem Anschluss des Gegenanschlussteils wird bei geschlossenem Entlüftungsventil der Kugelhahn wieder geöffnet, so dass der pneumatische Systemdruck dann an dem Verbraucher ansteht.

Bei den bekannten pneumatischen Anschlüssen ergibt sich ein weiteres Problem beim Lösen des Gegenanschlussteils von dem Zuführanschlussteil. Bei noch anstehendem pneumatischem Druck erfolgt beim mechanischen Lösen des Gegenanschlussteils vom Zuführanschlussteil ein Effekt, der als Peitschenknall bezeichnet wird. Da das Gegenanschlussteil mechanisch von dem Zuführanschlussteil gelöst ist, wird dieses durch den noch anstehenden pneumatischen Druck schlagartig abgedrückt. Um zu verhindern, dass das Gegenanschlussteil in Folge unkontrollierter Bewegung durch dieses Abdrücken eventuell umstehende Personen verletzt, muss dieses beim mechanischen Lösen konzentriert und mit vergleichsweise großer Kraft festgehalten werden.

Das Gegenanschlussteil wird mechanisch von dem Zuführanschlussteil gehalten, indem mittels eines verschiebbaren Betätigungselementes Blockierelemente gehalten bzw. gelöst werden, die in die ringförmige Nut des Gegenanschlussteils eingreifen. Dieses Betätigungselement ist an dem Zuführanschlussteil angebracht. Da - wie beschrieben - das Gegenanschlussstück sicher festgehalten werden muss, ist ein sicheres Lösen dieser Verbindung nur möglich, wenn beide Hände benutzt werden.

Außer diesen verbreitet eingesetzten Steckanschlüssen sind verschiedene andere Ausgestaltungen beschrieben. Hierzu wird beispielsweise auf die US-PS 5,451,031 verwiesen. Dort ist ein Steckanschluss beschrieben, bei dem in einer ersten Position ein Gegenanschlussteil formschlüssig in einem Zuführanschlussteil gehalten wird. Dabei ist die Druckluftversorgung von einer Versorgungsleitung zu dem Gegenanschlussteil geöffnet. Weiterhin ist eine Zwischenposition vorhanden, bei der das Gegenanschlussteil weiterhin formschlüssig gehalten wird. In dieser Zwischenposition ist die Druckluftversorgung gesperrt. Das Gegenanschlussteil ist dabei nicht mehr gegen die umgebende Atmosphäre abgedichtet.

Der in der Versorgungsleitung von dem Gegenanschlussteil zu einem angeschlossenen Verbraucher bestehende Überdruck kann daher diffus entweichen aus dem Zuführanschlussteil. Weiterhin ist eine zweite Position vorhanden, in der die Druckluftversorgung gesperrt ist und in der das Gegenanschlussteil gelöst ist. Beim Einsetzen des Gegenanschlussteils befindet sich der Steckanschluss in der zweiten Position. Anschließend wird über die Zwischenposition die erste Position eingestellt. Beim Abschalten kann das Gegenanschlussteil in der Zwischenposition in dem Steckanschlussteil verbleiben. Das Gegenanschlussteil kann auch entnommen werden. Dazu wird ausgehend von der ersten Position über die Zwischenposition die zweite Position eingestellt. Vorteilhaft hat dann in der zweiten Position bereits vorab eine Entlüftung in der Zwischenposition stattgefunden.

Dabei erfolgt die Einstellung über ein Betätigungselement, das als Schiebehülse auf dem Zuführanschlussteil ausgebildet ist. Dabei erfolgt durch eine Verschiebung in Längsrichtung ein Übergang von der ersten Position in die Zwischenposition und umgekehrt. Durch eine Drehbewegung um die Längsachse erfolgt ein Übergang von der Zwischenposition in die zweite Position und umgekehrt. Dabei unterliegt die Schiebehülse einer Zwangsführung derart, dass ein Übergang von der ersten Position in die zweite Position nur über die Zwischenposition möglich ist.

Außerdem ist noch ein Einschaltblockademittel vorhanden, durch das verhindert wird, dass bei nicht eingesetztem Gegenanschlussteil die Druckluftleitung geöffnet wird.

Weiterhin ist eine Ausführungsform bekannt, bei der ein Gegenanschlussteil in sein Zuführanschlussteil einsteckbar ist (WO 1980/001711 A1). Bei dieser Ausgestaltung ist kein gesondertes Betätigungselement im Sinne der Erfindung vorhanden. Das Gegenanschlussteil wird direkt gegriffen und in das Zuführanschlussteil eingesteckt. In Längsrichtung zur Einführung des Gegenanschlussteils liegt die Zwischenposition derart, dass das Gegenanschlussteil weiter in das Zuführanschlussteil eingeschoben wird. Diese Bewegung in die Zwischenposition erfolgt gegen eine Federkraft. Wird das Gegenanschlussteil in die Zwischenposition gebracht und losgelassen, wird das Gegenanschlussteil infolge der Federkraft entweder in die erste Position gedrückt oder in die zweite Position. Dies gilt ebenso, wenn der Benutzer das Gegenanschlussteil versehentlich loslässt, nachdem er es in die Zwischenposition gedrückt hat.

In der Zwischenposition ist das Zuführanschlussteil abgesperrt. Das Gegenanschlussteil wird in dieser Zwischenposition entlüftet. Dazu ist ein Entlüftungskanal vorhanden der durch das Gehäuse des Zuführanschlussteils seitlich hindurchgeführt ist.

Der vorliegenden Erfindung liegt die Aufgabe zu Grunde. die Bedienung bei der Kontaktierung und beim Lösen von pneumatischen Anschlüssen bzw. anderen Anschlüssen gasförmiger Medien zu verbessern.

Diese Aufgabe wird nach der vorliegenden Erfindung gemäß Anspruch 1 gelöst durch ein Zuführanschlussteil, das Verbindungsmittel aufweist zur Verbindung des Zuführanschlussteils mit einer Zuführvorrichtung für gasförmige Medien. Das Zuführanschlussteil weist Aufnahmemittel auf zur Aufnahme eines Gegenanschlussteils. Dabei weist das Zuführanschlussteil wenigstens ein Betätigungselement auf, das auf der äußeren Oberfläche des Zuführanschlussteils verschiebbar ist. Die Aufnahmemittel weisen Blockademittel auf. In einer ersten Position des wenigstens einen Betätigungselementes verhindern Blockademittel der Aufnahmemittel des Zuführanschlussteils ein mechanisches Lösen eines in die Aufnahmemittel eingesetzten Gegenanschlussteils durch eine formschlüssige Halterung des Gegenanschlussteils. In dieser ersten Position sind weiterhin Durchlassmittel geöffnet zur Abgabe des gasförmigen Mediums über das Zuführanschlussteil in ein eingesetztes Gegenanschlussteil. In einer zweiten Position des wenigstens einen Betätigungselementes ist das Zuführanschlussteil gegen eine Abgabe des gasförmigen Mediums gesperrt und die Blockademittel der Aufnahmemittel sind gelöst. Das wenigstens eine Betätigungsmittel weist eine Zwischenposition auf, in der das Zuführanschlussteil gegen eine Abgabe des gasförmigen Mediums gesperrt ist, wobei weiterhin die Blockademittel der Aufnahmemittel des Zuführanschlussteils ein mechanisches Lösen eines in die Aufnahmemittel eingesetzten Gegenanschlussteils durch eine formschlüssige Halterung des Gegenanschlussteils verhindern. Dabei ist ein in die Aufnahmemittel eingesetztes Gegenanschlussteil mit der umgebenden Atmosphäre verbunden. Nach der vorliegenden Erfindung weist das Zuführanschlussteil wenigstens einen Entlüftungskanal auf. In dieser Zwischenposition ist ein in das Zuführanschlussteil eingesetztes Gegenanschlussteil über den wenigstens einen Entlüftungskanal mit der umgebenden Atmosphäre verbunden. Dieser wenigstens eine Entlüftungskanal verläuft
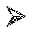 teilweise zwischen der Innenseite der Aufnahme des Gegenanschlussteils in dem Zuführanschlussteil und dem in das Zuführanschlussteil eingesetzten Gegenanschlussteil und/oder
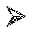 teilweise zwischen der äußeren Oberfläche des Zuführanschlussteils und dem wenigstens einen Betätigungselement und/oder
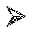 teilweise durch das wenigstens eine Betätigungselement hindurch.

Weiterhin wird diese Aufgabe nach der vorliegenden Erfindung gemäß Anspruch 3 gelöst durch einen Steckanschluss. Dieser Steckanschluss besteht aus einem Zuführanschlussteil gemäß Anspruch 1 und einem kompatiblen Gegenanschlussteil, wobei das Zuführanschlussteil und das Gegenanschlussteil zur Ausbildung des Steckanschlusses miteinander verbindbar sind. Bei hergestellter Verbindung des Steckanschlusses können gasförmige Medien durch den Steckanschluss gefördert werden. Das Zuführanschlussteil weist wenigstens ein Betätigungselement auf. In einer ersten Position des wenigstens einen Betätigungselementes ist das gasförmige Medium durch den Steckanschluss förderbar ist. Weiterhin sind in dieser ersten Position des Betätigungselementes das Zuführanschlussteil und das kompatible Gegenanschlussteil formschlüssig miteinander verbunden. In einer zweiten Position des wnigstens einen Betätigungselementes ist der Zuführanschluss des gasförmigen Mediums gesperrt. In dieser zweiten Position des wenigstens einen Betätigungselementes ist das Gegenanschlussteil nicht mehr formschlüssig mit dem Zuführanschlussteil verbunden. Weiterhin ist in einer Zwischenposition des wenigstens einen Betätigungselementes zwischen der ersten Position und der zweiten Position der Zuführanschluss des gasförmigen Mediums gesperrt und das Gegenanschlussteil gegenüber der umgebenden Atmosphäre geöffnet. Das Zuführanschlussteil und das Gegenanschlussteil sind in dieser Zwischenposition formschlüssig miteinander verbunden. Nach der vorliegenden Erfindung weist der Steckanschluss wenigstens einen Entlüftungskanal auf. In der genannten Zwischenposition des wenigstens einen Betätigungselementes ist das Gegenanschlussteil über den wenigstens einen Entlüftungskanal mit der umgebenden Atmosphäre verbunden, wobei dieser wenigstens eine Entlüftungskanal
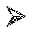 teilweise zwischen der Innenseite der Aufnahme des Gegenanschlussteils in dem Zuführanschlussteil und dem Gegenanschlussteil verläuft und/oder
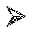 teilweise zwischen der äußeren Oberfläche des Zuführanschlussteils und dem wenigstens einen Betätigungselement verläuft und/oder
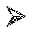 teilweise durch das Betätigungselement hindurch.

Sowohl bei dem Gegenstand nach Anspruch 1 als auch bei dem Gegenstand nach Anspruch 3 ist weiterhin wenigstens ein Blockademittel vorhanden, das bei einem Druck oberhalb eines Schwellwertes in dem Gegenanschlussteil zumindest in der Zwischenposition form- und oder kraftschlüssig in einer Sicherungsposition gehalten wird, so dass eine Bewegung des wenigstens einen Betätigungselementes aus dieser Zwischenposition in die zweite Position verhindert wird. Der Druck oberhalb des Schwellwertes hält das Blockademittel entgegen einer Federkraft in der Sicherungsposition. Bei Unterschreiten des Schwellwertes des Drucks in dem Gegenanschlussteil wird das Blockademittel durch die Federkraft aus der Sicherungsposition herausbewegt, so dass eine Bewegung des wenigstens einen Betätigungselementes aus der Zwischenposition in die zweite Position ermöglicht wird.

Dadurch wird vorteilhaft erreicht, dass das Betätigungselement in der Zwischenposition blockiert ist und zumindest verhindert wird, dass das Betätigungselement aus der Zwischenposition in die zweite Position verschoben wird, solange der Druck in dem Gegenanschlussteil noch nicht abgebaut ist. Dadurch kann vorteilhaft verhindert werden, dass durch ein zu schnelles Überführen des Betätigungselementes aus der Zwischenposition in die zweite Position durch einen eventuell noch vorhandenen Druck in dem Gegenanschlussteil das Gegenanschlussteil aus dem Zuführanschlussteil ruckartig herausgedrückt wird (Peitschenknall).

Diese Ausgestaltung erweist sich als besonders vorteilhaft in Kombination mit dem wenigstens einen Entlüftungskanal. Durch den wenigstens einen Entlüftungskanal wird eine definierte Strömung erreicht beim Abbau des Überdrucks. Dadurch ist es möglich, das Blockademittel so anzubringen, dass dessen Position abhängig von dem Druck in dem wenigstens einen Entlüftungskanal eingestellt wird. Dies ist konstruktiv wesentlich einfacher als dies bei einer lediglich diffusen Entlüftung der Fall ist, bei dem der Überdruck über eher geringe Abstände zwischen den Bauteilen abgebaut wird, ohne dass eine direkte Luftführung durch einen Entlüftungskanal vorhanden wäre.

Bei den Ausgestaltungen nach den Ansprüchen 1 und 3 ist beschrieben, dass die Blockademittel der Aufnahmemittel in der zweiten Position gelöst sind. Dies kann entsprechend dem Stand der Technik bedeuten, dass das Gegenanschlussteil in dieser zweiten Position undefiniert in seiner Lage ist nach dem Einsetzen in das Zuführanschlussteil. In diesem Fall müsste das Gegenanschlussteil in dieser Position festgehalten werden, bis dies nachfolgend nach dem Übergang zu der Zwischenposition durch die Blockademittel gehalten wird. Dies kann aber auch bedeuten, dass - entsprechend den nachfolgenden Ansprüchen 10 und 11 dieser Anmeldung - das Gegenanschlussteil in dieser zweiten Position federelastisch gehalten wird. Dies hat den Vorteil der bereits beschriebenen Möglichkeit der Einhandbedienung sowie der Möglichkeit der Bedienung mit angezogenen Arbeitshandschuhen.

In den Ansprüchen 1 und 3 sind verschiedene Möglichkeiten beschrieben, einen Entlüftungskanal vorzusehen. Aus dem Stand der Technik ist es lediglich bekannt, das Gegenanschlussteil in der Zwischenposition mit der umgebenden Atmosphäre zu verbinden, indem der Überdruck diffus entweicht. Das Gegenanschlussteil und die Innenfläche der Aufnahme des Zuführanschlussteils sind in dieser Position nicht abdichtend, so dass durch den (geringen) Abstand zwischen diesen Flächen der Überdruck in der Verbraucherleitung in der Zwischenposition abgebaut wird.

Demgegenüber sind nach den Ausgestaltungen der Ansprüche 1 und 3 Entlüftungskanäle vorhanden, die einen größeren Querschnitt aufweisen. Vorteilhaft kann dadurch der Überdruck schneller abgebaut werden. Bei einem zu langsamen Abbau des Überdrucks kann es passieren, dass der Benutzer frühzeitig von der Zwischenposition in die zweite Position schaltet. Bei einem dann noch vorhandenen Überdruck kann es wiederum dazu kommen, dass das Gegenanschlussteil mit dem sogenannten Peitschenknall herausgeschleudert wird.

Es hat sich dabei als vorteilhaft erwiesen, wenn der wenigstens eine Entlüftungskanal ein Verhältnis von seiner Breite zu Tiefe zwischen 0,5:1 und 10:1 hat, insbesondere in der Größenordnung von 1:1. Dies gilt auch, wenn der Überdruck über mehrere Entlüftungskanäle abgebaut wird.

Es ist dabei ersichtlich, dass eine Entlüftung auch erfolgen kann, indem die in den Ansprüchen 1 und 3 durch die Spiegelstriche getrennten Ausführungsformen der Entlüftungskanäle miteinander kombiniert werden.

Dabei erweist es sich auch als vorteilhaft, dass die Entlüftung durch den jeweiligen Entlüftungskanal in Richtung des Benutzers geführt wird. Dadurch wird der Entlüftungsvorgang für den Benutzer spürbar. Bei der Handhabung des Betätigungselements greift der Benutzer in den dargestellten Ausführungsbeispielen über die Öffnung des Entlüftungskanals hinweg. Das bedeutet, dass sich die Öffnung des Entlüftungskanals zwischen der Hand des Benutzers und dem Körper des Benutzers befindet. Die Spürbarkeit des Entlüftungsvorgangs für den Benutzer erweist sich insofern als vorteilhaft, weil der Benutzer dann unmittelbar weiß, wann er von der Zwischenposition in die zweite Position schalten kann.

Bei der Ausgestaltung nach den Ansprüchen 2 und 4 wird in Weiterbildung der Ausgestaltungen nach den Ansprüchen 1 und 3 in der zweiten Position ein in das Zuführanschlussteil eingesetztes Gegenanschlussteil lediglich durch federelastische Haltemittel gehalten.

Diese Ausgestaltungen nach den Ansprüchen 2 und 4 erweisen sich gegenüber dem bekannten Stand der Technik insoweit als vorteilhaft, als dass beim Einsetzen und Entnehmen des Gegenanschlussteils dieses zunächst in das Zuführanschlussteil eingesetzt werden kann und dort zunächst kraftschlüssig durch die federelastisch gelagerten Haltemittel gehalten wird. Beim Einsetzen und beim Entnehmen muss daher lediglich diese Federkraft überwunden werden. Andererseits bedingt diese Federkraft in dieser zweiten Position, dass das Gegenanschlussteil nach dem Einsetzen bereits eine definierte Position aufweist. Durch den Übergang von dieser zweiten Position in die Zwischenposition wird das Gegenanschlussteil dann verriegelt, indem das Gegenanschlussteil dann formschlüssig gehalten wird.

Vorteilhaft wird dadurch eine "Einhandbedienung" ermöglicht. Das Gegenanschlussteil wird nach dem Einführen selbsttätig gehalten, so dass das Betätigungselement betätigt werden kann, ohne dass das Gegenanschlussteil festgehalten werden muss, um dieses an einem Herausfallen zu hindern. Es hat sich gezeigt, dass eine Betätigung des Steckanschlusses auch mit Arbeitshandschuhen problemlos möglich ist. Es ist sogar auch mit angezogenen Arbeitshandschuhen weiterhin eine "Einhandbetätigung" möglich.

Diese kraftschlüssige Positionierung des Gegenanschlussteils in der zweiten Position erweist sich als vorteilhaft gegenüber dem bekannten Stand der Technik, bei dem in dieser zweiten Position keine Kraft auf das Gegenanschlussteil ausgeübt wird.

Bei der Ausgestaltung nach Anspruch 5 geht von dem Zuführanschlussteil ein Abluftkanal aus, der eine Abluftöffnung aufweist sowie eine Eingangsöffnung für ein Gegenanschlussteil mit einem Schlauch, wobei der Abluftkanal gegenüber dem Steckanschluss für die austretende Abluft beim Druckabbau in der Verbraucherleitung in der Zwischenposition abgedichtet ist sowie gegenüber dem mit dem Gegenanschlussteil verbundenen Schlauch. Weiterhin liegt die Öffnung des wenigstens einen Entlüftungskanals in dem Abluftkanal.

Bei der Ausgestaltung nach Anspruch 6 geht von dem Zuführanschlussteil ein Abluftkanal aus, der eine Abluftöffnung aufweist sowie eine Eingangsöffnung für ein Gegenanschlussteil, wobei der Abluftkanal gegenüber dem Steckanschluss für die austretende Abluft beim Druckabbau in der Verbraucherleitung in der Zwischenposition abgedichtet ist sowie gegenüber dem Gegenanschlussteil. Weiterhin liegt die Öffnung des wenigstens einen Entlüftungskanals in dem Abluftkanal.

Bei den Ausführungsbeispielen nach den Ansprüchen 5 und 6 erweist es sich als vorteilhaft, dass beim Druckabbau der Luft in der Verbraucherleitung in der Zwischenposition die Abluft gerichtet geführt und gefasst ist. Insbesondere entweicht diese Abluft nicht diffus bzw. unkontrolliert in den Raum. Dies erweist sich bei vielen Anwendungen als vorteilhaft, weil dadurch durch den Abbau des Überdrucks kein Ölnebel und auch keine Schmutzpartikel in die Umgebungsluft gebracht werden.

Dies ist in vielen Anwendungsfällen gefordert wie beispielsweise unter Reinraumbedingungen, in der Medizintechnik bei der Herstellung von pharmazeutischen Produkten oder bei der Herstellung medizinischer Apparate, in der Lebensmittelproduktion oder beispielsweise auch in Lackierbetrieben.

Die Führung der Abluft wird erreicht, indem der Abluftkanal zum einen gegen das Zuführanschlussteil abgedichtet ist sowie auch gegenüber dem Schlauch der Verbraucherleitung (Anspruch 5) bzw. gegenüber dem Gegenanschlussteil (Anspruch 6). An diese Abdichtung sind geringere Anforderungen zu stellen als an die Abdichtung des Steckanschlusses im Übrigen, weil bei der Entlüftung nur geringere Drucke auftreten.

Die Abdichtung kann beispielsweise gummielastisch ausgeführt sein.

Es ist auch möglich, den Abluftkanal beispielsweise mittels eines Klipp-Verschlusses zu befestigen. Dieser Klipp-Verschluss kann aus Kunststoff gefertigt sein.

An die Abluftöffnung des Abluftkanals ist vorteilhaft eine Abluftleitung anschließbar, über die die austretende Abluft kontrolliert abgeführt und ggf. gefiltert werden kann bzw. aus dem jeweiligen Raum herausgeführt werden kann.

Vorteilhaft wird durch die Ausgestaltungen nach den Ansprüchen 5 und 6 weiterhin das Entlüften für den Benutzer fühlbar und hörbar.

Die Bedienung des wenigstens einen Betätigungselementes wird dadurch nicht beeinträchtigt. Diese kann beispielsweise auch mit Arbeitshandschuhen betätigt werden.

Nachfolgende allgemeine Erläuterungen gelten für alle der vorgenannten Ausführungsformen.

Das Zuführanschlussteil und das Gegenanschlussteil sind zur Ausbildung des Steckanschlusses miteinander verbindbar. Bei den dargestellten pneumatischen Anschlüssen ist dabei das Zuführanschlussteil an der pneumatischen Versorgungsleitung angeschlossen. Das Gegenanschlussteil ist an der Zuführleitung zu einem pneumatischen Verbraucher angeschlossen. Wenn die Verbindung des Steckanschlusses hergestellt ist, können gasförmige Medien - insbesondere Druckluft pneumatischer Antriebe - durch den Steckanschluss gefördert werden.

Dadurch wird vorteilhaft erreicht, dass das Betätigungselement in der Zwischenposition blockiert ist und zumindest verhindert wird, dass das Betätigungselement aus der Zwischenposition in die zweite Position verschoben wird, solange der Druck in dem Gegenanschlussteil noch nicht abgebaut ist. Dadurch kann vorteilhaft verhindert werden, dass durch ein zu schnelles Überführen des Betätigungselementes aus der Zwischenposition in die zweite Position durch einen eventuell noch vorhandenen Druck in dem Gegenanschlussteil das Gegenanschlussteil aus dem Zuführanschlussteil ruckartig herausgedrückt wird (Peitschenknall).

Diese Ausgestaltung erweist sich als besonders vorteilhaft in Kombination mit einem der Ansprüche 1 bis 6. Dies liegt daran, dass durch den wenigstens einen Entlüftungskanal eine definierte Strömung erreicht wird beim Abbau des Überdrucks. Dadurch ist es möglich, das Blockademittel so anzubringen, dass dessen Position abhängig von dem Druck in dem wenigstens einen Entlüftungskanal eingestellt wird. Dies ist konstruktiv wesentlich einfacher als dies bei einer lediglich diffusen Entlüftung der Fall ist, bei dem der Überdruck über eher geringe Abstände zwischen den Bauteilen abgebaut wird, ohne dass eine direkte Luftführung durch einen Entlüftungskanal vorhanden wäre.

Grundsätzlich ist es aber auch möglich, ein solches Blockademittel nach Anspruch 7 auch in einer Anordnung vorzusehen, die keinen direkt eingebrachten Entlüftungskanal aufweist, sondern bei der die Entlüftung diffus erfolgt, wie dies beim Stand der Technik der Fall ist. Dabei kann eine solche Lösung ersichtlich auch dann vorgesehen sein, wenn das Gegenanschlussteil in der zweiten Position nicht federelastisch gehalten wird. Es wird daher vorbehalten, für den Gegenstand des Blockademittels für einen Übergang von der Zwischenposition in die zweite Position abhängig vom vorhandenen Überdruck im Gegenanschlussteil unabhängig von anderen Ausgestaltungen Schutz zu beanspruchen.

Nachfolgende allgemeine Erläuterungen gelten für alle der vorgenannten Ausführungsformen.

Das Zuführanschlussteil und das Gegenanschlussteil sind zur Ausbildung des Steckanschlusses miteinander verbindbar. Bei den dargestellten pneumatischen Anschlüssen ist dabei das Zuführanschlussteil an der pneumatischen Versorgungsleitung angeschlossen. Das Gegenanschlussteil ist an der Zuführleitung zu einem pneumatischen Verbraucher angeschlossen. Wenn die Verbindung des Steckanschlusses hergestellt ist, können gasförmige Medien - insbesondere Druckluft pneumatischer Antriebe - durch den Steckanschluss gefördert werden.

Dabei weist der aus dem Zuführanschlussteil und dem Gegenanschlussteil bestehende Steckanschluss eine erste Position auf, bei der zum einen das gasförmige Medium durch den Steckanschluss förderbar ist und in der zum anderen das Zuführanschlussteil und das kompatible Gegenanschlussteil formschlüssig miteinander verbunden sind.

Bei dem verbreitet eingesetzten Steckanschluss sind in dieser Position die Blockierelemente durch die verschiebbare Hülse in die ringförmige Nut des Gegenanschlussteils gedrückt. Außerdem ist durch das eingesteckte Gegenanschlussteil das Rückschlagventil in dem Zuführanschlussteil geöffnet. Der aus dem Zuführanschlussteil und dem Gegenanschlussteil bestehende Steckanschluss weist weiterhin eine zweite Position auf, bei der der Zuführanschluss des gasförmigen Mediums gesperrt ist und bei der das Gegenanschlussteil von dem Zuführanschlussteil gelöst ist. Dies ist der Fall, wenn die verschiebbare Hülse so verschoben ist, dass die Blockierelemente freigegeben sind. Das Gegenanschlussteil wird dann bei dem verbreitet verwendeten Steckanschluss durch den pneumatischen Druck herausgedrückt, so dass dann das Rückschlagventil in dem Zuführanschlussteil geschlossen ist.

Nach einem Ausführungsbeispiel nach der vorliegenden Erfindung besteht das Zuführanschlussteil aus einem Schiebeventil. Dieses kann auf eine pneumatische Versorgungsleitung aufgeschraubt werden. Über dieses Schiebeventil kann in der entsprechenden ersten Position durch eine entsprechende Stellung des Schiebeelementes ein eingestecktes Gegenanschlussteil mit der pneumatischen Versorgungsleitung kontaktiert sein. Ebenso können in dieser ersten Position wiederum Blockademittel vorhanden sein, durch die das Gegenanschlussteil mechanisch in dem Zuführanschlussteil gehalten wird. Dieses Schiebeventil kann wiederum eine zweite Position aufweisen, in der die pneumatische Versorgungsleitung gesperrt ist und in der außerdem die Blockademittel freigegeben sind.

Bei der vorliegenden Erfindung ist weiterhin eine Zwischenposition zwischen der ersten Position und der zweiten Position vorhanden, in der der Zuführanschluss des gasförmigen Mediums gesperrt ist und in der das Gegenanschlussteil gegenüber der umgebenden Atmosphäre geöffnet ist. Weiterhin sind das Zuführanschlussteil und das Gegenanschlussteil in dieser Zwischenposition formschlüssig miteinander verbunden.

Indem der Zuführanschluss (d.h. die pneumatische Versorgungsleitung) gesperrt ist und gleichzeitig das Gegenanschlussteil gegenüber der umgebenden Atmosphäre geöffnet ist und damit entlüftet, wird vorteilhaft vermieden, dass beim Lösen des Gegenanschlussteils der beschriebene Peitschenknall auftritt. Ein Abdrücken des Gegenanschlussteils kann in dieser Zwischenposition nicht erfolgen, weil das Gegenanschlussteil noch mechanisch (formschlüssig) in dem Zuführanschlussteil gehalten wird. In dieser Zwischenposition kann über das Gegenanschlussteil die zugehörige Leitung entlüftet werden, so dass bei einem nachfolgenden mechanischen Lösen des Gegenanschlussteils kein pneumatischer Druck mehr an dem Gegenanschlussteil ansteht.

Im praktischen Betrieb ergibt sich noch ein weiterer Vorteil durch diese definierte Zwischenposition. Bei einem längeren Nichtgebrauch des pneumatischen Verbrauchers kann die pneumatischer Versorgungsleitung gesperrt und die Versorgungsleitung zwischen dem Gegenanschlussteil und dem pneumatischen Verbraucher entlüftet werden, wobei gleichzeitig das Gegenanschlussteil mechanisch fest gehalten in dem Zuführanschlussteil verbleiben kann. Dies gilt zumindest so lange kein anderer pneumatischer Verbraucher an das Zuführanschlussteil angeschlossen werden soll.

Dies erweist sich insofern als vorteilhaft, weil das Gegenanschlussteil dann nicht frei herumhängt und wieder verwahrt werden muss. Da das Gegenanschlussteil formschlüssig mit dem Zuführanschlussteil zusammenwirken muss, müssen Beschädigungen an der Oberfläche des Gegenanschlussteils vermieden werden. Dies erweist sich aber als problematisch, wenn das Gegenanschlussteil frei wird nach dem Trennen des pneumatischen Verbrauchers von der pneumatischen Versorgungsleitung (wie dies bei der verbreiteten Lösung nach dem Stand der Technik der Fall ist). Demgegenüber erweist es sich als vorteilhaft, wenn das Gegenanschlussteil in dem Zuführanschlussteil verbleibt, auch wenn der Verbraucher pneumatisch getrennt ist.

Diese Möglichkeit der Entlüftung pneumatischer Verbraucher, wenn diese für eine bestimmte Zeit nicht in Betrieb genommen werden, erweist sich auch insofern als vorteilhaft, weil eine eventuelle negative Beeinflussung von pneumatischen Steuerungen und Stellantrieben durch angeschlossene, aber nicht benötigte Verbraucher vermieden werden kann. Dabei verbleibt wie ausgeführt das Gegenanschlussteil in dem Zuführanschlussteil.

Ein wesentlicher Bestandteil des Steckanschlusses ist das Zuführanschlussteil. Das Zuführanschlussteil weist Verbindungsmittel auf zur Verbindung des Zuführanschlussteils mit einer Zuführvorrichtung für gasförmige Medien. Diese Verbindungsmittel können beispielsweise ein Gewinde sein, durch das das Zuführanschlussteil dichtend auf ein Ende einer Pneumatikleitung aufgeschraubt werden kann. Die Verbindungsmittel können auch durch ein entsprechendes Teil des Zuführanschlussteils realisiert sein, das beispielsweise für eine Verbindung durch einen Schweißvorgang vorgesehen ist.

Die Zuführvorrichtung kann beispielsweise bei einer pneumatischen Energieversorgung aus der eingangs beschriebenen Stammleitung mit den Stichleitungen bestehen. Ebenso kann die Zuführvorrichtung aus einem Druckluftspeicher bestehen oder einem Kompressor, an die das Zuführanschlussteil dann angeschlossen wird.

Das Zuführanschlussteil weist Aufnahmemittel auf zur Aufnahme eines Gegenanschlussteils. Diese Aufnahmemittel können in einer buchsenförmigen Aufnahme bestehen, in die eine Steckvorrichtung zum Anschluss pneumatischer Verbraucher eingesteckt werden kann.

Dem Zuführanschlussteil ist wenigstens ein Betätigungselement zugeordnet. In einer ersten Position des wenigstens einen Betätigungselementes verhindern Blockademittel der Aufnahmemittel des Zuführanschlussteils ein mechanisches Lösen eines in die Aufnahmemittel eingesetzten Gegenanschlussteils. Weiterhin sind in dieser ersten Position Durchlassmittel geöffnet zur Abgabe des gasförmigen Mediums über das Zuführanschlussteil in ein eingesetztes Gegenanschlussteil.

In einer zweiten Position des wenigstens einen Betätigungselementes ist das Zuführanschlussteil gegen eine Abgabe des gasförmigen Mediums gesperrt. Außerdem sind in dieser zweiten Position des wenigstens einen Betätigungsmittels die Blockademittel der Aufnahmemittel gelöst. Dadurch kann das Gegenanschlussteil entnommen werden. Gleichzeitig ist in dem beschriebenen Beispiel der Verwendung der Erfindung im Zusammenhang mit einem Anschluss eines pneumatischen Verbrauchers an eine pneumatische Versorgungsleitung in dieser zweiten Position die pneumatische Versorgungsleitung bei nicht angeschlossenem pneumatischem Verbraucher gesperrt.

Nach der vorliegenden Erfindung weist das wenigstens eine Betätigungsmittel eine Zwischenposition auf, in der das Zuführanschlussteil gegen eine Abgabe des gasförmigen Mediums gesperrt ist. Weiterhin verhindern in dieser Zwischenposition die Blockademittel der Aufnahmemittel des Zuführanschlussteils ein mechanisches Lösen eines in die Aufnahmemittel eingesetzten Gegenanschlussteils. Außerdem ist in dieser Zwischenposition ein in die Aufnahmemittel eingesetztes Gegenanschlussteil mit der umgebenden Atmosphäre verbunden.

Indem der Zuführanschluss (d.h. die pneumatische Versorgungsleitung) über das Zuführanschlussteil gesperrt ist und gleichzeitig ein in die Aufnahmemittel des Zuführanschlussteils eingesetztes Gegenanschlussteil gegenüber der umgebenden Atmosphäre geöffnet ist und damit entlüftet, wird vorteilhaft vermieden, dass beim Lösen des Gegenanschlussteils der beschriebene Peitschenknall auftritt. Ein Abdrücken des Gegenanschlussteils kann in dieser Zwischenposition nicht erfolgen, weil das Gegenanschlussteil noch mechanisch in dem Zuführanschlussteil gehalten wird (form- und/oder kraftschlüssig). In dieser Zwischenposition kann über das Gegenanschlussteil die zugehörige Leitung entlüftet werden, so dass bei einem nachfolgenden mechanischen Lösen des Gegenanschlussteils kein pneumatischer Druck mehr an dem Gegenanschlussteil ansteht.

Im praktischen Betrieb ergibt sich noch ein weiterer Vorteil durch diese definierte Zwischenposition. Bei einem längeren Nichtgebrauch des pneumatischen Verbrauchers kann die pneumatischer Versorgungsleitung gesperrt und die Versorgungsleitung zwischen dem Gegenanschlussteil und dem pneumatischen Verbraucher entlüftet werden, wobei gleichzeitig das Gegenanschlussteil mechanisch fest gehalten in dem Zuführanschlussteil verbleiben kann. Dies gilt zumindest so lange kein anderer pneumatischer Verbraucher an das Zuführanschlussteil angeschlossen werden soll.

Dies erweist sich insofern als vorteilhaft, weil das Gegenanschlussteil dann nicht frei herumhängt und wieder verwahrt werden muss. Da das Gegenanschlussteil formschlüssig mit dem Zuführanschlussteil zusammenwirken muss, müssen Beschädigungen an der Oberfläche des Gegenanschlussteils vermieden werden. Dies erweist sich aber als problematisch, wenn das Gegenanschlussteil frei wird nach dem Trennen des pneumatischen Verbrauchers von der pneumatischen Versorgungsleitung (wie dies bei der verbreiteten Lösung nach dem Stand der Technik der Fall ist). Demgegenüber erweist es sich als vorteilhaft, wenn das Gegenanschlussteil in dem Zuführanschlussteil verbleibt, auch wenn der Verbraucher pneumatisch getrennt ist.

Insgesamt kann ein Zuführanschlussteil nach der vorliegenden Erfindung in Kombination mit den derzeit auf dem Markt befindlichen Gegenanschlussteilen zur Verwendung vorgesehen sein. Dies erweist sich als vorteilhaft, weil bei Betrieben mit vergleichsweise vielen pneumatischen Verbrauchern und damit mit einer entsprechenden Vielzahl bereits vorhandener Gegenanschlussteile keine Umrüstung dieser vorhandenen Elemente erfolgen muss. Vielmehr ist das Zuführanschlussteil so ausgelegt, dass dieses die bereits vorhandenen Gegenanschlussteile über die Blockademittel der Aufnahmemittel mechanisch halten kann und gleichzeitig in den entsprechenden Positionen des wenigstens einen Betätigungselementes die beschriebenen pneumatischen Verbindungen herstellt.

Die beschriebene Möglichkeit der Entlüftung pneumatischer Verbraucher, wenn diese für eine bestimmte Zeit nicht in Betrieb genommen werden, erweist sich auch insofern als vorteilhaft, weil eine eventuelle negative Beeinflussung von pneumatischen Steuerungen und Stellantrieben durch angeschlossene, aber nicht benötigte Verbraucher vermieden werden kann. Dabei verbleibt wie ausgeführt das Gegenanschlussteil in dem Zuführanschlussteil.

In einer weiteren Ausgestaltung kann der Steckanschluss bzw. das Zuführanschlussteil so ausgestaltet sein, dass die Überführung von der ersten Position in die zweite Position durch wenigstens ein Betätigungselement erfolgt, wobei das wenigstens eine Betätigungselement bei dieser Überführung von der ersten Position in die zweite Position einer Zwangsführung unterliegt derart, dass eine Überführung des Steckanschlusses von der ersten Position in die zweite Position nur über die Zwischenposition möglich ist.

Bei dieser Ausgestaltung sind die Positionen durch entsprechende Stellungen des wenigstens einen Betätigungselementes einstellbar, wobei die Positionen des Zuführanschlussteils sowie des Gegenanschlussteils - absolut oder relativ zueinander - unverändert bleiben. Es wird dann lediglich das wenigstens eine Betätigungselement bewegt.

Es wird mit dieser Ausgestaltung vorteilhaft erreicht, dass ein Benutzer beim Übergang von der ersten Position in die zweite Position diese Zwischenposition nicht umgehen kann. Soll bei einem angeschlossenen pneumatischen Verbraucher dieser Verbraucher von der pneumatischen Versorgungsleitung gelöst werden, ist es durch die Zwangsführung zwingend notwendig, vor dem Erreichen der zweiten Position (und damit dem mechanisch gelösten Zustand des Gegenanschlussteils) zunächst in die Zwischenposition zu gehen. In dieser Zwischenposition ist die pneumatische Versorgungsleitung bereits gesperrt und die Leitung zum pneumatischen Verbraucher wird entlüftet. Dabei wird aber gleichzeitig noch das Gegenanschlussteil mechanisch festgehalten. Das bedeutet, dass in dem Moment, in dem das Gegenanschlussteil mechanisch nicht mehr festgehalten wird, das Gegenanschlussteil bereits nicht mehr mit Druck beaufschlagt wird. Der beschriebene Peitschenknall lässt sich damit verhindern.

Nach einer weiteren vorteilhaften Ausgestaltung ist der Steckanschluss bzw. das Zuführanschlussteil derart ausgestaltet, dass die Überführung von der ersten Position in die Zwischenposition durch eine erste Betätigung erfolgt und dass die Überführung von der Zwischenposition in die zweite Position durch eine zweite Betätigung erfolgt, wobei die erste und die zweite Betätigung voneinander getrennt sind.

Dadurch wird vorteilhaft erreicht, dass für den Benutzer durch die getrennt auszuführenden Betätigungen deutlich wahrnehmbar wird, in welcher der beschriebenen Position sich das wenigstens eine Betätigungsmittel des Steckanschlusses bzw. des Zuführanschlussteils befindet.

Die getrennt auszuführenden Betätigungen können beispielsweise so realisiert sein, dass bei gleicher Betätigungsrichtung bei der Betätigung von der ersten Position in die Zwischenposition ein geringerer Kraftaufwand erforderlich ist als bei der Betätigung von der Zwischenposition in die zweite Position. Die Betätigungsrichtung kann dabei beispielsweise durch ein verschiebbares Betätigungselement definiert sein, das in Längsrichtung der pneumatischen Leitung verschiebbar ist. Der erhöhte Kraftaufwand beim Übergang von der Zwischenposition in die zweite Position kann beispielsweise realisiert sein, indem für diese Bewegung eine Betätigung zusätzlich gegen die Kraft einer Feder erforderlich ist, wobei die Federkraft nur bei der Betätigung von der Zwischenposition in die zweite Position wirkt.

Eine alternative oder zusätzliche Realisierung zu dieser Trennung der Betätigungen mit unterschiedlichem Kraftaufwand ergibt sich, wenn der Steckanschluss bzw. das Zuführanschlussteil so ausgestaltet ist, dass die Orientierung der Betätigungsrichtung der ersten Betätigung unterschiedlich ist zur Orientierung der Betätigungsrichtung der zweiten Betätigung.

Durch diese unterschiedlichen Orientierungen der Betätigungsrichtungen ist für den Benutzer wiederum gut wahrnehmbar, in welcher Position sich der Steckanschluss bzw. das Zuführanschlussteil befindet.

Gegebenenfalls können die entsprechenden Positionen noch durch optische Markierungen gekennzeichnet werden, die entsprechend in Deckung sind, wenn die entsprechende Position eingestellt ist. Ebenso kann auch eine haptische Markierung vorgesehen sein, indem beispielsweise bei einer Drehbetätigung elliptisch ausgestaltete Elemente nur in einer einstellbaren Stellung in Deckung sind und in anderen einstellbaren Positionen gegeneinander verdreht sind.

Die unterschiedlichen Orientierungen können beispielsweise realisiert sein durch eine erste Linearbewegung entlang einer ersten Achse und eine zweite Linearbewegung entlang einer zweiten Achse, wobei die erste Achse und die zweite Achse beispielsweise im rechten Winkel zueinander orientiert sind.

In einer besonders vorteilhaften Ausgestaltung ist der Steckanschluss bzw. das Zuführanschlussteil so ausgestaltet, dass eine der Betätigungen einer Schiebebewegung in einer Richtung entspricht und die andere Betätigung einer Drehbetätigung.

Durch diese Trennung und Unterscheidung der Betätigungsrichtungen ist für den Benutzer gut wahrnehmbar, welche der Betätigungen gerade erfolgt und in welcher Position sich der Steckanschluss bzw. das Zuführanschlussteil befindet.

In Weiterbildung dieser Lösung kann die Drehung um eine Achse erfolgen, die der Richtung der Schiebebewegung entspricht.

Dadurch lässt sich in einfacher Weise die Bewegung nacheinander ausführen.

Es hat sich dabei als besonders vorteilhaft erwiesen, wenn die erste Betätigung der Schiebebewegung entspricht und die zweite Betätigung der Drehbetätigung.

Dies erweist sich insofern als vorteilhaft, als die Änderungen der pneumatischen Anschlüsse bei der ersten Betätigung erfolgt. Da diese Betätigung als Schiebebewegung ausgestaltet ist, die in Längsrichtung der Leitung orientiert sein kann, können dabei O-ringförmige Dichtungen entlang gleiten. Dadurch lässt sich in den einzelnen Positionen eine hinreichende Abdichtung der Anschlüsse auch bei hohen Drucken erreichen. Dennoch ist der Übergang der Positionen durch ein Gleiten dieser O-ringförmigen Dichtungen einfach möglich.

Durch die Ausgestaltung der zweiten Betätigung als Drehbetätigung ist für den Benutzer haptisch gut wahrnehmbar, dass mit dieser Drehbewegung (vergleichbar einer Schraubbewegung) ein mechanisches Lösen des Gegenanschlussteils realisiert wird.

In weiterer vorteilhafter Ausgestaltung erfolgt eine Betätigung des wenigstens einen Betätigungselementes aus der ersten Position in die Zwischenposition in einer bestimmten Betätigungsrichtung. Weiterhin erfolgt dabei bei einer Betätigung des wenigstens einen Betätigungselementes aus der Zwischenposition in der Gegenrichtung zu der bestimmten Betätigungsrichtung eine Überführung des wenigstens einen Betätigungselementes aus der Zwischenposition in die erste Position.

Dadurch ist für den Benutzer wiederum gut und eindeutig definiert und erkennbar, in welcher Position sich der Steckanschluss bzw. das Zuführanschlussteil befindet.

In nochmals weiterer vorteilhafter Ausgestaltung erfolgt eine Betätigung des wenigstens einen Betätigungselementes aus der Zwischenposition in die zweite Position in einer definierten Betätigungsrichtung. Weiterhin erfolgt dabei bei einer Betätigung des wenigstens einen Betätigungselementes aus der zweiten Position in der Gegenrichtung zu der definierten Betätigungsrichtung eine Überführung des wenigstens einen Betätigungselementes aus der zweiten Position in die Zwischenposition.

Dadurch ist für den Benutzer wiederum gut und eindeutig definiert und erkennbar, in welcher Position sich der Steckanschluss bzw. das Zuführanschlussteil befindet.

Es hat sich ebenfalls als besonders vorteilhaft erwiesen, wenn wenigstens ein Einschaltblockademittel vorhanden ist, das in der zweiten Position form- und oder kraftschlüssig in einer Sicherungsposition gehalten wird, so dass eine Bewegung des wenigstens einen Betätigungsmittels aus dieser zweiten Position verhindert wird, wobei das wenigstens eine Einschaltblockademittel durch ein in das Zuführanschlussteil eingeführtes Gegenanschlussteil aus der Sicherungsposition heraus bewegt wird, so dass eine Bewegung des wenigstens einen Betätigungsmittels ermöglicht wird.

Dadurch wird vorteilhaft erreicht, dass ein "Öffnen" des Zuführanschlussteils zur Abgabe von Druckluft nur möglich ist, wenn ein Gegenanschlussteil und damit ein Verbraucher angeschlossen ist. Ein "Öffnen" des Zuführanschlussteils zur Abgabe von Druckluft ohne einen angeschlossenen Verbraucher wird dadurch vorteilhaft verhindert. Durch diese Ausgestaltung wird daher die Betriebssicherheit gegenüber einer eventuellen Fehlbedienung nochmals verbessert.

Eine Ausgestaltung kann dabei derart realisiert sein, dass das wenigstens eine Einschaltblockademittel ein Sicherungselement aufweist, das federelastisch in eine korrespondierende Aufnahme formschlüssig eingedrückt wird, wobei das Sicherungselement durch ein in das Zuführanschlussteil eingeführtes Gegenanschlussteil entgegen der Federkraft aus der korrespondierenden Aufnahme herausgedrückt wird.

Durch diese Ausgestaltung nach wird die vorher beschriebene Sicherungsfunktion in einfacher Weise konstruktiv realisiert.

Ein Ausführungsbeispiel der Erfindung ist in der Zeichnung dargestellt. Es zeigt dabei im Einzelnen:
- Fig. 1:: ein Zuführanschlussteil nach der vorliegenden Erfindung,
- Fig. 2:: ein Ausführungsbeispiel für eine Zwangsführung von der ersten Position zur zweiten Position über die Zwischenposition,
- Fig. 3:: ein Ausführungsbeispiel für die mechanische Fixierung des Gegenanschlussteils,
- Fig. 4 bis Fig. 14:: weitere Ausführungsbeispiele für die mechanische Fixierung des Gegenanschlussteils mit einer Darstellung des Entlüftungskanals in Figur 4,
- Fig. 15 bis Fig. 19:: Ausgestaltungsmöglichkeiten für ein Einschaltblockademittels und
- Fig. 20 und 21:: ein Blockademittel als Sicherung gegen ein vorzeitiges Entnehmen des Gegenanschlussteils beim Abtrennen eines Verbrauchers von der Versorgungsleitung,
- Fig. 22:: eine alternative Ausgestaltung eines Entlüftungskanals,
- Fig. 23 und 24:: ein Ausführungsbeispiel für einen Abluftkanal und
- Fig. 25:: eine weitere alternative Ausgestaltung eines Entlüftungskanals.

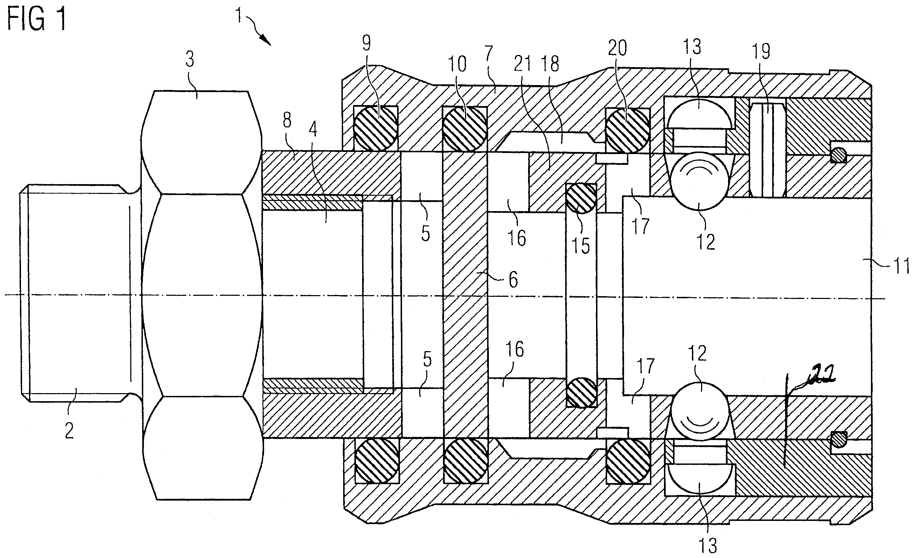

Figur 1 zeigt ein Zuführanschlussteil 1 nach der vorliegenden Erfindung. Dieses Zuführanschlussteil 1 kann als Abschlussstück auf ein Ende einer pneumatischen Versorgungsleitung dichtend aufgeschraubt werden. Dies erfolgt in dem in Figur 1 gezeigten Ausführungsbeispiel mit einem Innengewinde in dem Anschluss 2. Zum Aufschrauben des Zuführanschlussteils 1 kann der Sechskant 3 verwendet werden, an dem ein Gabelschlüssel passender Weite angreifen kann.

Das Zuführanschlussteil 1 weist im Weiteren ein Innenteil auf, das einen ersten Innenraum 4 aufweist. Dieser erste Innenraum 4 ist durch eine Abschlusswand 6 abgeschlossen. Weiterhin weist dieser erste Innenraum 4 noch Durchgangskanäle 5 durch die äußere Wand des ersten Innenraums 4 auf.

Weiterhin ist zu sehen, dass das Zuführanschlussteil 1 noch eine in axialer Richtung verschiebbare Hülse 7 aufweist. Diese Hülse 7 stellt in dem dargestellten Ausführungsbeispiel das wenigstens eine Betätigungsmittel im Sinne dieser Erfindung dar.

Die zuführende Pneumatikleitung ist in der dargestellten Position der Hülse 7 dichtend abgeschlossen. Die Durchgangskanäle 5 des ersten Innenraums 4 sind über die Hülse 7 sowie die beiden O-Ringdichtungen 9 und 10 dichtend abgeschlossen. Da weiterhin die Abschlusswand 6 vorhanden ist, kann daher in der dargestellten Position der Hülse 7 keine Druckluft aus der pneumatischen Versorgungsleitung austreten. Die O-Ringdichtung 9 wirkt in dieser Position der Hülse 7 mit dem Wandteil 8 des Innenteils des Zuführanschlussteils 1 zusammen. Die O-Ringdichtung 10 wirkt mit der Abschlusswand 6 zusammen. Damit sind die Durchgangkanäle 5 vollständig abgedichtet.

Weiterhin ist zu sehen, dass auf der dem Anschluss 2 entgegen gesetzten Seite des Zuführanschlussteils 1 eine Aufnahmeöffnung 11 vorhanden ist, in die ein Gegenanschlussteil eingesetzt werden kann. Dieses Gegenanschlussteil kann beispielsweise ein Stecker eines pneumatischen Verbrauchers sein. Dieses Gegenanschlussteil ist in der Darstellung der Figur 1 nicht gezeigt.

Ein eingesetztes Gegenanschlussteil wird in dem Zuführanschlussteil 1 gehalten, indem die Kugeln 12 in eine entsprechende Ringnut an dem äußeren Umfang des Gegenanschlussteils eingreifen. Es ist zu sehen, dass in der in Figur 1 gezeigten Darstellung die Kugeln 12 jeweils durch einen elastischen Ausrücker 13 in ihrer Position gehalten werden. Insbesondere wird durch den elastischen Ausrücker 13 in der dargestellten Position erreicht, dass die Kugeln 12 radial nach innen gedrückt werden. Bei einem eingesetzten Gegenanschlussteil greifen die Kugeln 12 dann in dieser Position in die Ringnut im Gegenanschlussteil ein.

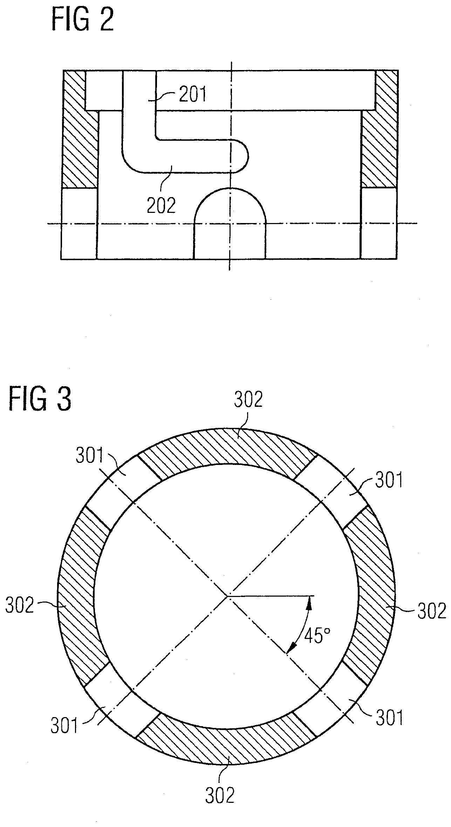

Die elastischen Ausrücker 13 befinden sind jeweils an den Positionen auf dem Umfang des Kreises, an denen in der Darstellung der Figur 3 die Abstände 301 zwischen den Abstützteilen 302 sind.

Die Kugeln 12 lassen sich gegen die elastischen Ausrücker 13 nach außen drücken, so dass dadurch das Gegenanschlussteil entnommen werden kann. Beim Einsetzen des Gegenanschlussteils werden die Kugeln 12 durch die elastischen Ausrücker 13 radial nach innen in die Ringnut des Gegenanschlussteils gedrückt.

An den Positionen, an denen in Figur 3 die Abstützteile 302 sind (d.h. zwischen den elastischen Ausrückern 13), bilden nicht kompressible Teile (nämlich die Abstützteile 302) die radiale Fortsetzung und damit die Abstützung der Kugeln 12 in radialer Richtung. Die Kugeln 12 werden bei einer entsprechenden Drehung aus einer Position, bei der die elastischen Ausrücker 13 die radiale Fortsetzung der Kugeln 12 bilden, zu einer Position, bei der Abstützteile 302 die radiale Fortsetzung der Kugeln 12 bilden, an einem radialen Ausweichen nach außen gehindert.

Es ist zu sehen, dass die elastischen Ausrücker 13 durch eine Hinterschneidung an einem Herausfallen gehindert sind.

In der in Figur 1 dargestellten Position lassen sich die Kugeln 12 durch die Elastizität der Ausrücker 13 bei einer entsprechenden Kraft in radialer Richtung nach außen drücken. Die Elastizität kann gegeben sein, indem die elastischen Ausrücker 13 aus einem Polymer bestehen, das eine entsprechende Zahl von Lufteinschlüssen aufweist, so dass die elastischen Ausrücker kompressibel sind. Diese Kompressibilität ist dabei reversibel, so dass die elastischen Ausrücker wieder in ihre ursprüngliche Form zurückgehen, wenn die äußere Kraft auf die elastischen Ausrücker entsprechend schwächer wird.

Weiterhin ist in dem Innenteil des Zuführanschlussteils 1 noch eine O-Ringdichtung 15 zu sehen, die am äußeren Umfang eines eingesetzten Gegenanschlussteils anliegt.

Es ist zu sehen, dass das Innenteil des Zuführanschlussteils 1 im Bereich für den Anschluss des Gegenanschlussteils zwei Kanäle 16 und 17 aufweist, die die Seitenwand dieses Innenteils durchdringen.

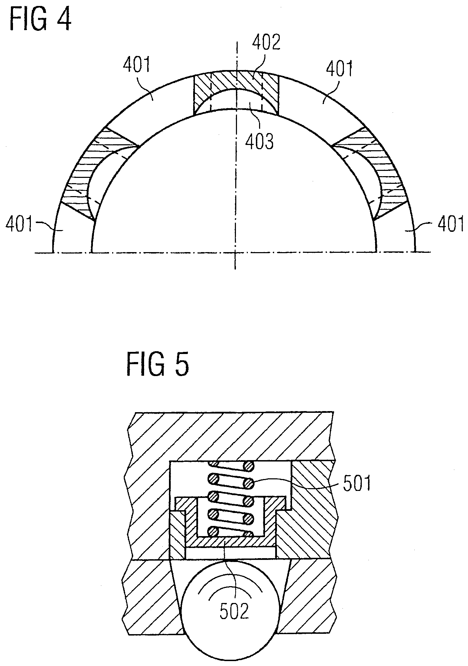

Außerdem ist zu sehen, dass die Hülse 7 noch einen inneren Ringkanal 18 aufweist. Damit wird ein eingesetztes Gegenanschlussstück in der in Figur 1 gezeigten Position bezüglich einer Verschiebung entlang der Längsachse der Hülse 7 entlüftet, indem die Luft aus dem vorderen Ende des Gegenanschlusstücks austritt über den Kanal 16, den inneren Ringkanal 18 der Hülse 7, den Kanal 17 und von dort zwischen der äußeren Seitenwand des Gegenanschlussteils und der inneren Seitenwand des Innenteils des Zuführanschlussteils 1. Die Luft kann dabei zwischen den Kugeln 12 hindurchströmen. Dazu wird weiterhin auf Figur 4 verwiesen. Dort sind weitere Kanäle 403 beschrieben, durch die die Luft aus dem Zuführanschlussteil 1 abgeführt wird.

In der in Figur 1 gezeigten Position der Hülse 7 ist das Gegenanschlussstück bereits entlüftet. Figur 1 zeigt das Zuführanschlussteil 1 bzw. die Hülse 7 in einer Position, die der zweiten Position im Sinne der vorliegenden Beschreibung entspricht.

Die Hülse 7 weist eine weitere O-Ringdichtung 20 auf, die in der in Figur 1 gezeigten Position keine weitere Wirkung hat.

In der in Figur 1 gezeigten Darstellung ist die zuführende Versorgungsleitung der Pneumatikleitung am Anschluss 2 gesperrt. Ein eingesetztes Gegenanschlussteil ist in der dargestellten Position bereits entlüftet. Die Kugeln 12 sind in radialer Richtung nach außen beweglich gegen die elastischen Ausrücker 13. Dadurch ist das Gegenanschlussteil nicht mehr mechanisch fest gehalten und aus dem Zuführanschlussteil entnehmbar.

Damit entspricht die in Figur 1 dargestellte Position der zweiten Position im Sinne der vorliegenden Gesamtdarstellung.

Es ist weiter ein Führungsstift 19 zu sehen, der an der Innenwand der Hülse 7 angebracht ist und in einer Nut in dem Innenteil des Zuführanschlussteils 1 geführt wird. Diese Nut und die Zwangsführung des Führungsstiftes 19 und damit auch der Bewegung der Hülse 7 werden in Figur 2 noch näher erläutert.

Nach einer Drehung der Hülse 7 um deren Längsachse werden die Kugeln in radialer Richtung fest gehalten und nach innen gedrückt in eine entsprechende Ringnut eines Gegenanschlussteils, das in das Zuführanschlussteil 1 eingesetzt ist. In radialer Richtung befinden sich dann oberhalb der Kugeln 12 die Abstützteile 302, so dass die Kugeln 12 daran gehindert sind, in radialer Richtung nach außen auszuweichen. Dadurch wird das Gegenanschlussteil mechanisch fest in dem Zuführanschlussteil 1 gehalten, ist aber noch nicht pneumatisch angeschlossen und verbunden mit der Leitung, die an dem Anschluss 2 des Zuführanschlussteils 1 angeschlossen ist. Diese Position entspricht dann der Zwischenposition. Es ist ersichtlich, dass der zuvor beschriebene Weg, über den ein Druck im Gegenanschlussteil entweichen kann, auch bei einer Drehung der Hülse 7 noch offen ist. Das Gegenanschlussteil bleibt also mit der umgebenden Atmosphäre verbunden.

Im weiteren kann durch die Zwangsführung der in Figur 2 dargestellten Nut die Hülse 7 als Betätigungselement in axialer Richtung des Zuführanschlussteils 1 verschoben werden in Richtung des Anschlusses 2. Es ist ersichtlich, dass bei einem derartigen Verschieben der Hülse 7 ein eingesetztes Gegenanschlussteil mit der pneumatischen Versorgungsleitung verbunden wird. Dabei bleibt das Gegenanschlussteil mechanisch gehalten.

Die O-Ringdichtung 10 wirkt dann mit dem Wandteil 8 des Innenteils des Zuführanschlussteils 1 zusammen. Die O-Ringdichtung 20 wirkt mit dem Wandteil 21 des Innenteils des Zuführanschlussteils 1 zusammen.

Der innere Ringkanal 18 der Hülse 7 überbrückt dann die Abschlusswand 6 und verbindet die Durchgangskanäle 5 mit den Kanälen 16. Von dort tritt die Luft der Pneumatikanlage in das Innere des Gegenanschlussteils ein. Dieses Gegenanschlussteil ist an seiner Außenfläche nochmals mit der O-Ringdichtung 15 abgedichtet.

In dieser beschriebenen Position der Hülse 7 (die in der Figur 1 nicht gezeigt wird), wird daher ein Austreten von Luft der Pneumatikanlage aus dem Zuführanschlussteil 1 verhindert.

Eine solche Position entspricht der ersten Position im Sinne dieser Patentanmeldung.

Das Zuführanschlussteil nach Figur 1 stellt ein Schiebeventil dar. Dies erweist sich insofern als besonders vorteilhaft, weil die Verschiebung der Hülse insbesondere auch in Längsrichtung des Zuführanschlussteils nicht gegen einen anstehenden Druck einer Pneumatikleitung erfolgen muss. Es sind dabei lediglich Reibungskräfte des Zuführanschlussteils selbst zu überwinden. Im Unterschied zu anderen Lösungen aus dem Stand der Technik ist es nicht notwendig, einzelne Teile (beispielsweise bei einem Rückschlagventil) gegen einen anstehenden Druck einer Pneumatikleitung zu bewegen. Es wird lediglich ein bestimmtes Volumen (nämlich das des inneren Ringkanals 18 des Zuführanschlussteils 1) insgesamt verschoben. Sobald dieses Volumen mit dem Atmosphärendruck verbunden ist, entspannt sich der in dem inneren Ringkanal 18 bis dahin vorherrschende Druck. Das Verschieben dieses Volumens erfolgt weitgehend kraftfrei.

Insbesondere wird es durch eine solche Lösung auch möglich, bei größeren Querschnitten von Pneumatikleitungen pneumatische Verbraucher anzuschließen oder zu trennen, indem eine sichere "Einhandbedienung" möglich wird. Insbesondere kann auch dann keine unkontrollierte Bewegung des Gegenanschlussteils auftreten durch den beschriebenen Peitschenknalleffekt. Ebenso kann die zusätzlich Anbringung von Absperr- und Entlüftungsventilen mit den vergleichsweise umständlichen Abfolgen der Bedienungsschritte unterbleiben, weil auch bei den größeren Leitungsquerschnitten und höheren Drucken in der Pneumatikleitung das Anschließen und Trennen der pneumatischen Verbraucher weitgehend kraftfrei erfolgen kann.

Figur 2 zeigt ein Ausführungsbeispiel für die Zwangsführung von der ersten Position in die zweite Position über die Zwischenposition. Figur 2 zeigt einen Ausschnitt der äußeren Fläche des Innenteils des Zuführanschlussteils 1. In diesem Ausschnitt ist zu sehen, dass in die äußere Fläche eine Nut 201, 202 eingebracht ist. Mit dieser Nut wirkt der Stift 19 entsprechend der Darstellung der Figur 1 zusammen, der aus der inneren Oberfläche der Hülse 7 herausragt. Auf dem Teilstück 201 der Nut wird die Hülse 7 über den Stift 19 so geführt, dass sich die Hülse 7 nur in axialer Richtung längs des Zuführanschlussteils 1 bewegen lässt. Erreicht der Stift 19 das Ende des Teilstücks 201 der Nut im Übergang zu dem Teilstück 202, lässt sich die Hülse 7 nicht mehr weiter in Längsrichtung zum Zuführanschlussteil 1 bewegen. Durch die Führung des Stiftes 19 lässt sich die Hülse 7 dann entweder zurück in Längsrichtung des Zuführanschlussteils 1 bewegen oder durch eine andere Orientierung der Betätigung im Sinne einer Drehbewegung. Der Stift 19 der Hülse 7 wird dann entlang dem Teilstück 202 der Nut geführt.

Der Übergang von dem Teilstück 201 zu dem Teilstück 202 definiert dabei die Zwischenposition im Sinne der vorliegenden Beschreibung.

Figur 3 zeigt die Anordnung der Abstützteile 302. Im Verhältnis zur Figur 1 handelt es sich dabei um einen Schnitt senkrecht zur Zeichnungsebene in der Darstellung der Figur 1 durch die (in Figur 3 nicht dargestellten) Kugeln 12. Es ist zu sehen, dass auf dem Umfang vier dieser Abstützteile 302 angebracht sind, die jeweils etwa einen Abstand voneinander aufweisen, der in etwa dem Durchmesser der Kugeln 12 entspricht. Bei der Darstellung nach Figur 3 mit vier Abstützteilen 302 sind entsprechend auch vier Kugeln 12 vorhanden. Ist die Hülse 7 mit dem ringförmigen Element der Darstellung der Figur 3 so gedreht, dass die Kugeln 12 in radialer Richtung von jeweils einem Abstützteil 302 fortgesetzt werden, können die Kugeln 12 nicht in radialer Richtung nach außen gedrückt werden. Ein in das Zuführanschlussteil 1 eingesetztes Gegenanschlussteil ist dann mechanisch fest gehalten.

Wird hingegen die Hülse 7 und damit auch die Anordnung der Abstützteile 302 um 45 Grad gedreht, so können die Kugeln 12 nach außen gedrückt werden.

In den Löcher 301 zwischen den Abstützteilen 302 können die elastischen Ausrücker 13 entsprechend der Darstellung der Figur 1 positioniert sein. In dieser um 45 Grad gedrehten Stellung können die Kugeln 12 also radial nach außen gedrückt werden, beispielsweise durch die Elastizität der Ausrücker 13. Andere Ausgestaltungen für Ausrückelemente, die an den Positionen 301 eingesetzt werden können, werden nachfolgend noch beschrieben.

Ein eingestecktes Gegenanschlussteil kann dann aus dem Zuführanschlussteil 1 entnommen werden.

Figur 4 zeigt eine Darstellung eines Teils des Zuführanschlussteils 1 in einem Schnitt senkrecht zur Zeichnungsebene der Figur 1 durch die (hier wiederum nicht dargestellten) Kugeln 12. Dargestellt ist hier das Innenteil des Zuführanschlussteils 1. Die Kugeln 12 befinden sich an den Positionen 401. Zwischen diesen Positionen sind Wandelemente 402 vorhanden. Es ist zu sehen, dass auf der Innenseite dieser Wandelemente 402 Nuten 403 eingefräst sind, die entlang der Wandelemente 402 und in axialer Richtung des Zuführanschlussteils 1 darüber hinaus verlaufen von dem Ende 11 des Zuführanschlussteils 1 bis zu dem Kanal 17. Dadurch kann ein Überdruck aus dem Gegenanschlussteil entweichen über die Kanäle 16, 18, 17 und 403.

Es ist zu sehen, dass in der Darstellung nach Figur 4 sechs Kugeln 12 vorgesehen sind, während in der Darstellung nach Figur 3 lediglich vier Kugeln vorgesehen sind. Dies ändert aber nichts an den Grundprinzipien, die im Zusammenhang mit den Figuren 3 und 4 erläutert werden sollen.

Figur 5 zeigt eine Ausgestaltung, bei der an den entsprechenden Positionen der elastischen Ausrücker 13 der Darstellung nach Figur 1 an den Positionen 301 der Darstellung nach Figur 3 mit einer Federkraft 501 belastete Ausrückelemente 502 angeordnet sind, die durch die Federkraft 501 radial nach innen gedrückt werden. Die Ausrückelemente 502 werden durch die Federkraft 501 maximal radial so weit nach innen gerückt, dass diese an den Anschlägen aufliegen. Die Kugeln 12 sind in dieser Position nach innen gedrückt, so dass diese in eine Ringnut eines Gegenanschlussteils eingreifen. Das Funktionsprinzip ist im Übrigen dasselbe wie bei den elastischen Ausrückern 13, die im Zusammenhang mit den Figuren 1 und 3 bereits erörtert wurden.

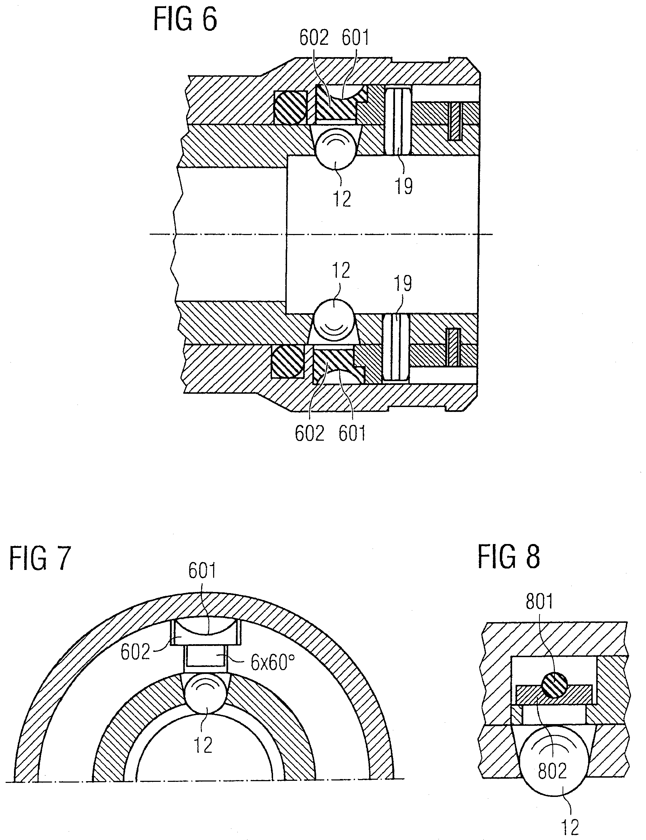

Eine weitere alternative Ausgestaltung ist in den Figuren 6 und 7 zu sehen. Figur 6 zeigt einen Teilausschnitt eines Zuführanschlussteils. Dieser entspricht dem rechten Teil des Zuführanschlussteils nach der Figur 1. Anstelle der elastischen Ausrücker 13 ist in der Figur 6 ein formelastisches Ausrückelement 602 zu sehen. In der Darstellung der Figur 6 weist dieses an der Oberseite eine kugelförmige Ausnehmung 601 auf. Das Material des formelastischen Ausrückelementes 602 ist biegbar. Wird durch die Kugel 12 eine Kraft auf das formelastische Ausrückelement 602 ausgeübt, verformt sich dieses derart, dass die kugelförmige Ausnehmung 601 verschwindet. Dadurch verformt sich die äußere Kontur des formelastischen Ausrückelementes 602, so dass die Kugeln 12 jeweils nach außen ausweichen können. Gleichzeitig weisen die formelastischen Ausrückelemente 602 die Eigenschaft auf, dass deren Verformung reversibel ist. Das bedeutet, dass bei einer geringeren Kraft auf die Kugeln 12 in radialer Richtung nach außen die Kugeln 12 wiederum durch die Rückstellkraft der formelastischen Ausrückelemente 602 nach innen gedrückt werden.

Bei der Ausgestaltung der Figur 6 ist zu sehen, dass das Zuführanschlussteil dort zwei Führungsstifte 19 aufweist.

Figur 7 zeigt die Darstellung nach Figur 6 in einem Schnitt senkrecht zur Zeichnungsebene der Figur 6 durch die Kugeln 12. Die formelastischen Ausrückelemente 602 sind wiederum an den Positionen 301 der Darstellung nach Figur 3 angeordnet. Zwischen den formelastischen Ausrückelementen 602 sind wiederum Abstützteile 302 entsprechend der Darstellung nach Figur 3 angeordnet. Abhängig von der Drehung der Hülse relativ zu dem Zuführanschlussteil im Übrigen können die Kugeln 12 dann radial nach außen gedrückt werden oder nicht.

Figur 8 zeigt eine weitere alternative Ausgestaltung, bei der anstelle der elastischen Ausrücker 13 ein Ausrückelement 802 vorhanden ist, das durch einen elastisch verformbaren O-Ring 801 nach unten gedrückt wird. Der O-Ring 801 bewirkt wiederum eine federelastische Kraft auf das Ausrückelement 802.

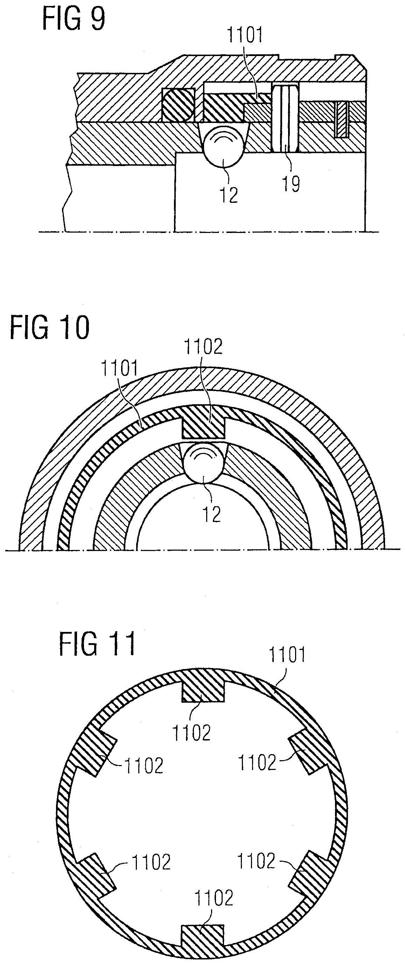

Anstelle der einzelnen elastischen Ausrücker 13, der Ausrückelemente 502, 602 bzw. 802 nach den Darstellungen der vorhergehenden Figuren kann entsprechend der Darstellung der Figuren 9 bis 11 auch ein Noppenring 1101 vorgesehen werden, der dann aus einem vergleichsweise starren Material besteht. Der Noppenring 1101 weist entsprechend radial nach innen weisende Noppen 1102 auf. Sofern die Verdrehung des Noppenrings 1101 derart ist, dass diese Noppen 1102 die radiale Fortsetzung der Kugeln 12 bilden, werden die Kugeln 12 dann daran gehindert, radial nach außen ausweichen zu können. Die Kugeln werden durch die Noppen in dieser Drehstellung in der radial weiter innen liegenden Position gehalten, in der diese in die Ringnut eines eingesetzten Gegenanschlussteils eingreifen und dieses mechanisch halten. Ist die Verdrehung des Noppenrings 1101 hingegen derart, dass ein Zwischenraum zwischen zwei Noppen 1102 die radiale Fortsetzung der Kugeln 12 bildet, können diese Kugeln 12 jeweils in den entsprechenden Zwischenraum radial nach außen ausweichen. Eine Gegenanschlussteil ist in dieser Drehstellung mechanisch gelöst.

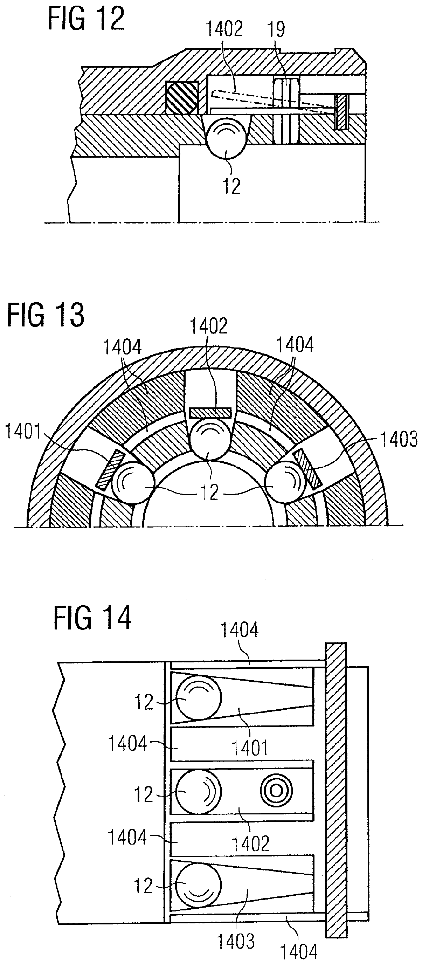

Die Figuren 12 bis 14 zeigen eine weitere alternative Ausgestaltung für eine federelastische Lagerung der Kugeln 12 in einer bestimmten Drehposition der Hülse 7. In dieser Ausgestaltung erfolgt die Lagerung der Kugeln 12 in dieser Drehposition durch Blattfedern 1401, 1402, 1403, die als Zungen ausgebildet sind, die an einer (kürzeren) Seitenkante befestigt sind.

In der Darstellung der Figur 14 ist zu sehen, dass die die beiden Seitenkanten der Blattfedern 1401 und 1403 in Richtung der Seitenkante aufeinander zu laufen, an der die Blattfedern 1401 und 1403 befestigt sind. Da die Hülse 7 ringförmig ausgebildet ist, erweist es sich bei dieser Ausgestaltung als vorteilhaft, dass die Seitenkante verkürzt ist, an der die Blattfedern 1401, 1403 befestigt sind. Dadurch können die Blattfedern 1401 und 1403 leichter um die jeweilige Seitenkante gebogen werden, an der die Blattfedern 1401 und 1403 befestigt sind. Sind diese Seitenkanten nicht verkürzt, lassen sich die Blattfedern durch die Krümmung der Seitenkante der Befestigung der Blattfedern auf einem Kreisbogen nur schwerer biegen. Es ist weiterhin zu sehen, dass die Seitenkanten der Blattfeder 1402 nicht aufeinander zu laufen. Durch diese Blattfeder 1402 ist in dem dargestellten Ausführungsbeispiel der Führungsstift 19 hindurch geführt. Um eine ausreichende Stabilität der Blattfeder 1402 insgesamt zu gewährleisten, laufen deren Seitenkanten daher nicht aufeinander zu. Die Zwischenelemente 1404 zwischen den Blattfedern 1401, 1402 und 1403 sind nicht elastisch gelagert sondern starr. Wird die Hülse 7 also derart verdreht, dass jeweils eines der Zwischenelemente 1404 in radialer Richtung außen an den Kugeln 12 anliegt, sind die Kugeln 12 daran gehindert, in radialer Richtung nach außen gedrückt zu werden.

Figur 12 zeigt einen Ausschnitt entsprechend einem Teil der Darstellung der Figuren 6 und 9, Figur 14 zeigt eine Draufsicht auf die Anordnung der Blattfedern nach der Figur 12 von oben und Figur 13 zeigt das Ausführungsbeispiel in einem Schnitt senkrecht zur Zeichnungsebene durch die Kugeln 12.

Es ist dabei ersichtlich, dass für die Lagerung der Kugeln 12 auch andere Ausgestaltungen möglich sind. Beispielsweise können die Blattfedern über den Kugeln 12 verbleiben, wobei dann lediglich die Hohlräume für die Bewegung der Blattfedern sowie Blockadeelemente, die ein Ausrücken der Blattfedern verhindern, durch eine entsprechende Drehbewegung der Hülse 7 positioniert werden. Der Führungsstift 19 ist hierbei außerhalb der Blattfeder 1402 angeordnet.

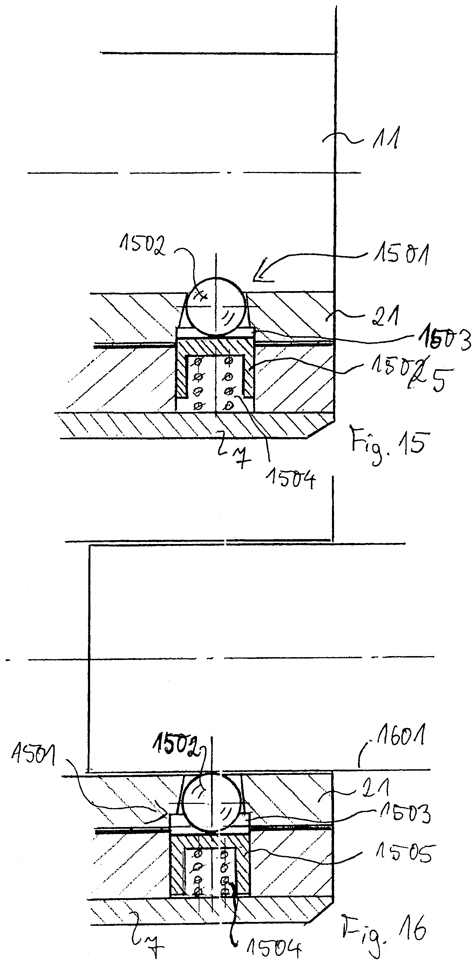

Figur 15 zeigt einen Teilausschnitt eines Zuführanschlussteils. In der Darstellung der Figur 1 handelt es sich hierbei um den Teil rechts unten, das beispielsweise an der dort mit der Bezugsziffer 22 bezeichneten Position vorgesehen sein kann.

Es ist die Hülse 7 zu sehen, die das Betätigungselement bildet. Ebenso ist die Aufnahmeöffnung 11 zu sehen, in die ein Gegenanschlussteil einschiebbar ist. In der Darstellung der Figur 15 ist dieses Gegenanschlussteil nicht eingeschoben.

Es ist ein Einschaltblockademittel 1501 zu sehen. Dieses Einschaltblockademittel 1501 besteht aus einer Kugel 1502, die in die Aufnahmeöffnung 11 hineinragt, dabei aber federelastisch gelagert ist, so dass diese Kugel 1502 auch aus der Aufnahmeöffnung 11 entgegen der Federkraft der federelastischen Lagerung hinausgedrückt werden kann.

Das Einschaltblockademittel 1501 weist weiterhin ein Sicherungselement 1505 auf. In der in der Figur 15 gezeigten zweiten Position des Zuführanschlussteils ohne eingeschobenes Gegenanschlussteil wird dieses Sicherungselement 1505 durch die federelastische Lagerung 1504 in eine Ausnehmung 1503 in dem inneren Wandteil 21 des Zuführanschlussteils hineingedrückt. Diese Ausnehmung 1503 umgreift das Sicherungselement 1505 formschlüssig. Dadurch kann die mit diesem Sicherungselement 1505 verbundene Hülse 7 in der in Figur 15 gezeigten Darstellung nicht aus der dargestellten zweiten Position herausbewegt werden.

Ein versehentliches Öffnen des Zuführanschlussteils im Sinne einer Abgabe von Druckluft ohne eingesetztes Gegenanschlussteil und damit ohne angesteckten Verbraucher wird damit verhindert.

Figur 16 zeigt das Ausführungsbeispiel nach Figur 15, wobei in der Darstellung der Figur 16 ein Gegenanschlussteil 1601 eingesetzt ist.

Es ist zu sehen, dass durch dieses Gegenanschlussteil 1601 die Kugel 1502 aus der Aufnahmeöffnung 11 herausgedrückt wird. Dadurch wird weiterhin das Sicherungselement 1505 entgegen der Federkraft 1504 aus der Ausnehmung 1503 herausgedrückt. Dadurch wird die Hülse 7 wiederum gegenüber dem inneren Wandteil 21 des Zuführanschlussteils bewegbar.

Da das Zuführanschlussteil in der zweiten Position dargestellt ist, ist die Hülse 7 als Betätigungselement dann aus dieser zweiten Position in die Zwischenposition bewegbar.

In dem Ausführungsbeispiel der Figuren 15 und 16 ist die federelastische Lagerung durch eine Spiralfeder aus einem Metall dargestellt. Es sind aber auch andere Möglichkeiten realisierbar zur federelastischen Lagerung des Sicherungselementes 1502.

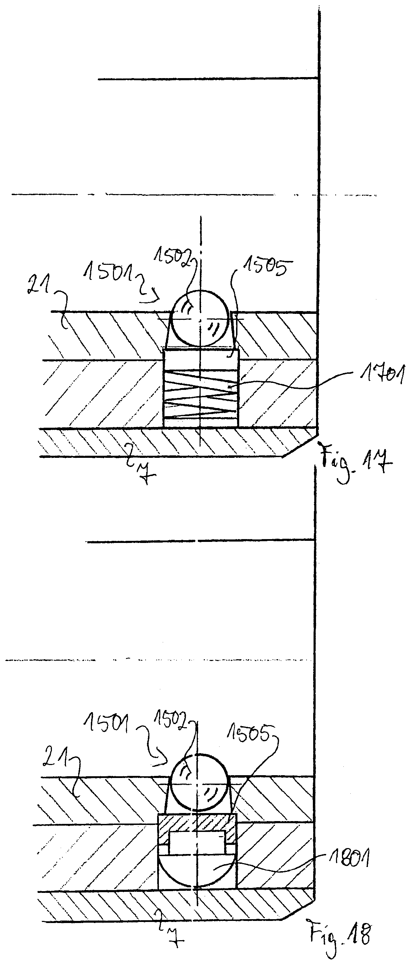

Entsprechend der Darstellung der Figur 17 kann die federelastische Lagerung auch durch eine Feder 1701 realisiert werden, die aus einem Kunststoff gespritzt wird. Besonders vorteilhaft und kostengünstig in der Herstellung ist es, das Sicherungselement 1505 sowie die Feder 1701 einstückig aus Kunststoff in einem Spritzverfahren herzustellen.

Figur 18 zeigt eine weitere Möglichkeit der Realisierung der federelastischen Lagerung des Sicherungselementes 1505. In dem Ausführungsbeispiel der Figur 18 ist das Sicherungselement 1505 über einen Formkörper 1801 aus einem elastomeren Material federelastisch gelagert. Ein solcher Formkörper ist kostengünstig herstellbar und hat eine lange Lebensdauer.

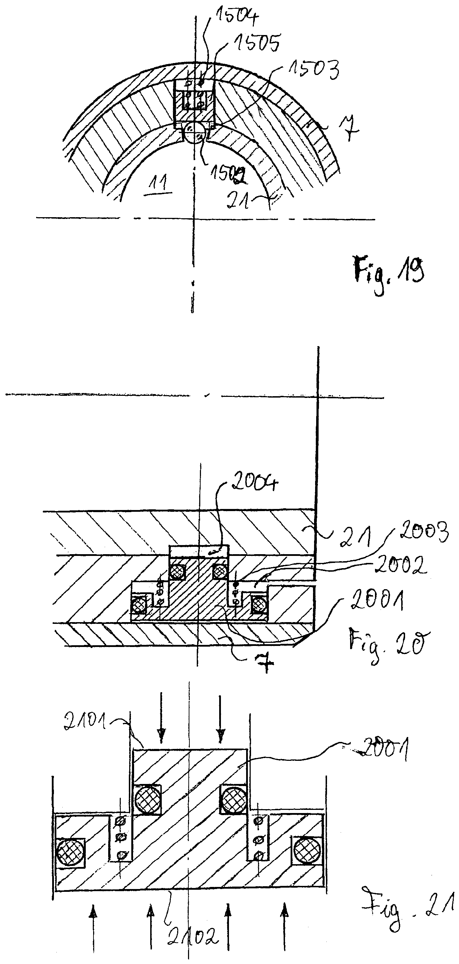

Figur 19 zeigt das Einschaltblockademittel 1501 in einem seitlichen Schnitt zur Zeichnungsebene der Figur 16. Es ist zu sehen, dass in der Darstellung der Figur 19 die Kugel 1502 aus der Aufnahmeöffnung 11 herausgedrückt ist. Dadurch greift auch das Sicherungselement 1505 nicht mehr in die Ausnehmung 1503 ein. Das Betätigungselement 7 ist daher in dem gezeigten Ausführungsbeispiel aus der zweiten Position heraus gegenüber dem inneren Mantelteil 21 des Zuführanschlussteils bewegbar.

Figur 20 zeigt ein Blockademittel 2001 als Sicherung gegen ein vorzeitiges Entnehmen des Gegenanschlussteils beim Abtrennen eines Verbrauchers von der Versorgungsleitung. Figur 20 zeigt wiederum einen Ausschnitt aus dem Zuführanschlussteil nach der Figur 1. In der Darstellung der Figur 1 ist dieser Ausschnitt wiederum rechts unten angeordnet, beispielsweise an der mit der dort mit der Bezugsziffer 22 bezeichneten Position.

Sofern sowohl das Blockademittel 2001 nach Figur 20 als auch ein Einschaltblockademittel 1501 nach den Figuren 15 bis 19 vorgesehen sein soll, ist die Position des Blockademittels 2001 nach Figur 20 gegenüber der Position des Einschaltblockademittels 1501 in einer bestimmten Winkelstellung durch eine Drehung um die Längsachse des Zuführanschlussteils gedreht. Dadurch wird es möglich, an einer bestimmten Stelle in axialer Richtung des Zuführanschlussteils sowohl das Einschaltblockademittel 1501 als auch das Blockademittel 2001 unterzubringen.

Beim Entweichen des Überdrucks in dem Gegenanschlussteil nach der Überführung der Hülse 7 aus der ersten Position in die Zwischenposition wird der Überdruck u.a. auch über die Kanäle 18 und 17 abgebaut. Das innere Mantelteil 21 des Zuführanschlussteils sowie die Hülse 7 sind nicht gegeneinander abgedichtet. Der Hauptanteil der überschüssigen Luft strömt zwischen dem Gegenanschlussteil sowie dem inneren Mantelteil 21 ab. Ein Teil des Überdrucks wird auch abgebaut, indem Luft zwischen den nicht gegeneinander abgedichteten Teilen des inneren Mantelteils 21 sowie der Hülse 7 ausströmt. Für diesen Zeitraum liegt auch in diesen Zwischenräumen der Druck an, der in dem Gegenanschlussteil vorliegt. Das Blockademittels 2001 ist als Differenzkolben ausgebildet, der zwei unterschiedlich große Flächen aufweist, die - sich einander gegenüber liegend - mit demselben Druck beaufschlagt werden.

Abhängig von den Druckverhältnissen an der kleineren Fläche 2101 zur größeren Fläche 2102 sowie den Druckverhältnissen in der (abgedichteten) Innenkammer 2002 sowie den Kräften, die weiterhin durch die Feder 2003 aufgebracht werden, wird das Blockademittel 2001 in der Darstellung der Figur 20 angehoben oder in die (in Figur 20 dargestellte) untere Position gedrückt.

Dabei kann es vorteilhaft sein, die Innenkammer nicht als geschlossenes Volumen auszugestalten sondern nach außen mit dem Umgebungsdruck in Verbindung zu bringen. Damit sind die Kräfteverhältnisse besser vorherzusehen. Beispielsweise spielen dann Temperaturänderungen keine Rolle. In der Darstellung der Figur 20 ist zu sehen, dass sich das Volumen der Innenkammer 2002 in der oberen Stellung gegenüber der unteren Stellung des Blockademittels 2001 in etwa halbiert hat. Bei einer Verbindung der Innenkammer 2002 mit dem Umgebungsdruck spielen Druckänderungen infolge einer Kompression des in der Innenkammer 2002 befindlichen Luftvolumens keine Rolle.

Es ist zu sehen, dass die Oberseite des Blockademittels 2001 in seiner oberen Stellung in eine Ausnehmung 2004 in dem inneren Mantelteil 21 des Zuführanschlussteils eingreift. Die Oberseite des Blockademittels 2001 wird in der Ausnehmung formschlüssig gehalten. Solange das Blockademittel 2001 in seiner oberen Stellung gehalten wird daher verhindert, dass die Hülse 7 aus der Zwischenposition in die zweite Position bewegt wird. Auf Grund der Verhältnisse der Flächen 2102 zur Fläche 2101 wird das Blockademittel 2001 in seiner oberen Position gehalten, so lange der Druck im Inneren des Gegenanschlussteils, der in der dargestellten Zwischenposition gerade abgebaut wird, oberhalb eines Schwellwertes liegt. Bei Unterschreiten dieses Schwellwertes wird das Blockademittel 2001 durch die Feder 2003 in die untere Stellung gedrückt. Die Hülse 7 kann dann aus der Zwischenposition in die zweite Position bewegt werden.

Im Zusammenhang mit den Ausführungsbeispielen sind verschiedene Ausführungsformen federelastischer Elemente dargestellt. Dies betrifft insbesondere die Bezugsziffern 13, 501, 602, 801, 1101, 1401, 1402, 1504, 1701, 1801, 2003. Es ist dabei ersichtlich, dass es vorteilhaft ist, diese federelastischen Elemente einheitlich auszubilden und eine Ausführungsform für ein federelastisches Element für die beschriebenen Anwendungsfälle einheitlich zu benutzen. Die Reduzierung der Teilevielfalt vereinfacht das Produkt in technischer Hinsicht und führt zu erheblichen Kosteneinsparungen.

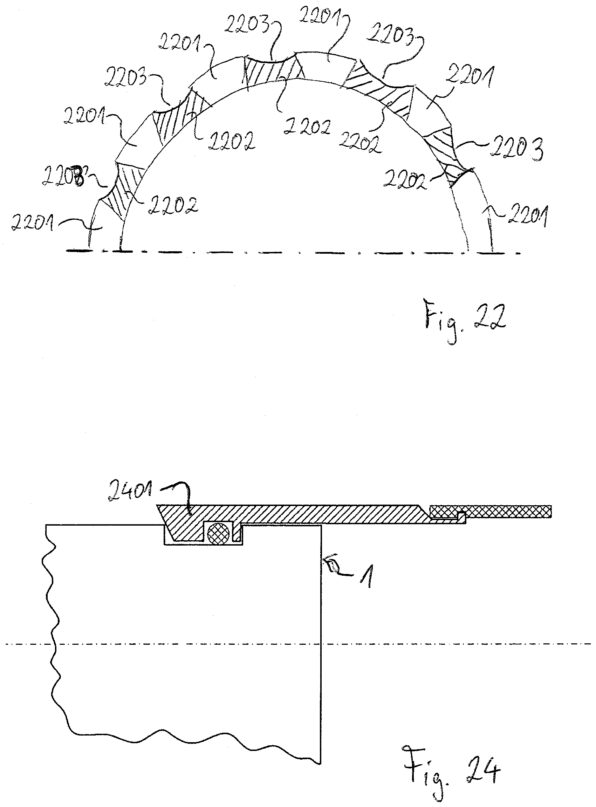

Figur 22 zeigt eine Darstellung eines Teils des Zuführanschlussteils 1 in einem Schnitt senkrecht zur Zeichnungsebene der Figur 1 durch die (hier wiederum nicht dargestellten) Kugeln 12. Dargestellt ist hier das Innenteil des Zuführanschlussteils 1. Die Kugeln 12 befinden sich an den Positionen 2201. Zwischen diesen Positionen sind Wandelemente 2202 vorhanden. Es ist zu sehen, dass auf der Außenseite dieser Wandelemente 2202 Nuten 2203 eingefräst sind, die entlang der Wandelemente 2202 und in axialer Richtung des Zuführanschlussteils 1 darüber hinaus verlaufen von dem Ende 11 des Zuführanschlussteils 1 bis zu dem Kanal 17. Dadurch kann ein Überdruck aus dem Gegenanschlussteil entweichen über die Kanäle 16, 18, 17 und 2203.

Es ist zu sehen, dass in der Darstellung nach Figur 22 zwölf Kugeln 12 vorgesehen sind, während in der Darstellung nach Figur 3 lediglich vier Kugeln vorgesehen sind. Dies ändert aber nichts an den Grundprinzipien, die im Zusammenhang mit den Figuren 3 und 22 erläutert werden sollen.

Alternativ oder zusätzlich ist es auch möglich, einen Entlüftungskanal zu realisieren, indem auf der Innenseite des Betätigungselementes entsprechende Nuten eingefräst sind.

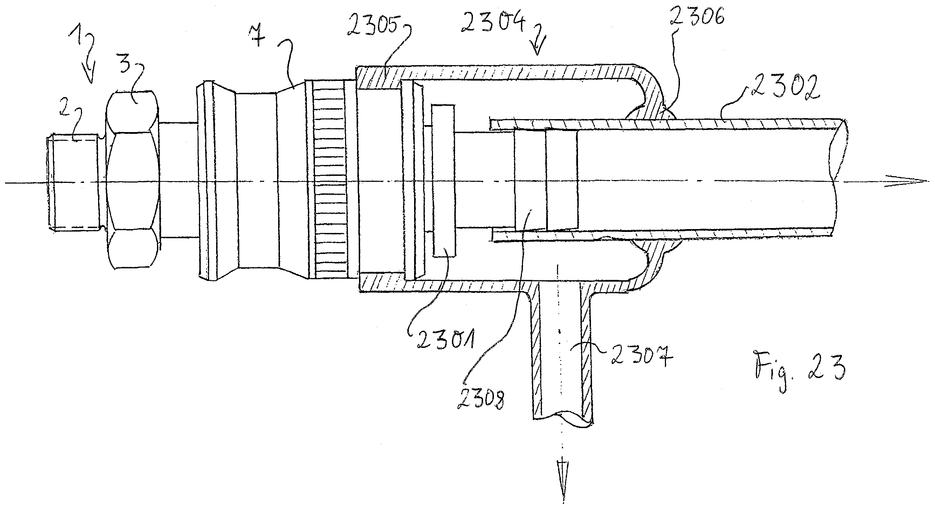

Gemäß der Darstellung der Figur 23 ist ein Zuführanschlussteil 1 zu sehen, in das ein Gegenanschlussteil 2301 eingeschoben ist. Dieses Gegenanschlussteil 2301 weist weiterhin einen Schlauchanschluss 2308 auf, an den ein Schlauch 2302 einer Verbraucherleitung angeschlossen ist.

Es ist zu sehen, dass von dem Zuführanschlussteil 1 ein Abluftkanal 2304 ausgeht.

Dieser Abluftkanal 2304 weist eine Abluftöffnung 2307 auf.

Weiterhin weist dieser Abluftkanal 2304 eine Eingangsöffnung auf, durch die ein Gegenanschlussteil 2301 mit dem Schlauch 2302 eingeführt sind.

Der Abluftkanal 2304 ist an der Position 2305 gegenüber dem Zuführanschlussteil für die austretende Abluft beim Druckabbau in der Verbraucherleitung 2302 in der Zwischenposition abgedichtet sowie gegenüber dem mit dem Gegenanschlussteil 2301 verbundenen Schlauch 2302.

Weiterhin liegt die Öffnung des wenigstens einen Entlüftungskanals in dem Abluftkanal 2304. Dies ist im Einzelnen in Figur 23 nicht dargestellt. Es handelt sich bei diesem Ausführungsbeispiel um die Entlüftungskanäle, die zwischen dem Gegenanschlussteil und der Innenwand der Einführungsöffnung des Zuführanschlussteils ausgebildet sein können oder zwischen der Außenwand der Einführungsöffnung des Zuführanschlussteils und dem wenigstens einen Betätigungselement. Es ist dabei ersichtlich, dass auch ein Entlüftungskanal, der durch das wenigstens eine Betätigungselement hindurchgeführt ist, so ausgestaltet werden kann, dass dessen Öffnung innerhalb des Abluftkanals liegt.

Es ist dabei ersichtlich, dass der Abluftkanal 2304 auch so geführt sein kann, dass die Abdichtung 2306 nicht gegenüber dem Schlauch 2302 der Verbraucherleitung erfolgt sondern gegenüber dem Gegenanschlussteil 2301. Der Abluftkanal 2304 wird dann entsprechend kleiner ausgeführt.

Es erweist sich bei dem Ausführungsbeispiel nach Figur 23 als vorteilhaft, dass beim Druckabbau der Luft in der Verbraucherleitung 2302 in der Zwischenposition die Abluft gerichtet geführt und gefasst ist. Insbesondere entweicht diese Abluft nicht diffus bzw. unkontrolliert in den Raum. Dies erweist sich bei vielen Anwendungen als vorteilhaft, weil dadurch durch den Abbau des Überdrucks kein Ölnebel und auch keine Schmutzpartikel in die Umgebungsluft gebracht werden.

Dies ist in vielen Anwendungsfällen gefordert wie beispielsweise unter Reinraumbedingungen, in der Medizintechnik bei der Herstellung von pharmazeutischen Produkten oder bei der Herstellung medizinischer Apparate, in der Lebensmittelproduktion oder beispielsweise auch in Lackierbetrieben.

Die Führung der Abluft wird erreicht, indem der Abluftkanal 2304 zum einen gegen das Zuführanschlussteil 1 abgedichtet ist (2305) sowie auch gegenüber dem Schlauch 2302 der Verbraucherleitung (Anspruch 7) (2306) bzw. gegenüber dem Gegenanschlussteil (Anspruch 8) (hier nicht dargestellt). An diese Abdichtungen sind geringere Anforderungen zu stellen als an die Abdichtung des Steckanschlusses im Übrigen, weil bei der Entlüftung nur geringere Drucke auftreten.

Die Abdichtung kann beispielsweise gummielastisch ausgeführt sein.

An die Abluftöffnung 2307 des Abluftkanals 2304 ist vorteilhaft eine Abluftleitung anschließbar, über die die austretende Abluft kontrolliert abgeführt und ggf. gefiltert werden kann bzw. aus dem jeweiligen Raum herausgeführt werden kann.

Vorteilhaft wird durch die Ausgestaltung nach Figur 23 weiterhin das Entlüften für den Benutzer fühlbar und hörbar.

Die Bedienung des wenigstens einen Betätigungselementes wird dadurch nicht beeinträchtigt. Diese kann beispielsweise auch mit Arbeitshandschuhen betätigt werden.

Der Abluftkanal 2304 kann beispielsweise dauerhaft an dem Schlauch 2302 (bzw. an dem Gegenanschlussteil 2301) angebracht werden. Bei einem Einsetzen des Gegenanschlussteils 2301 in das Zuführanschlussteil 1 wird dann der Abluftkanal 2304 dichtend an dem Zuführanschlussteil 1 angebracht, indem das gummielastisch abdichtende Ende so über das Zuführanschlussteil 1 geführt wird, dass dieses Ende des Abluftkanals 2304 in eine Nut des Zuführanschlussteils 1 eingreift.

Entsprechend der Ausgestaltung der Figur 24 ist es auch möglich, den Abluftkanal 2304 beispielsweise mittels eines Klipp-Verschlusses 2401 an dem Zuführanschlussteil 1 zu befestigen. Dieser Klipp-Verschluss 2401 kann aus Kunststoff gefertigt sein.

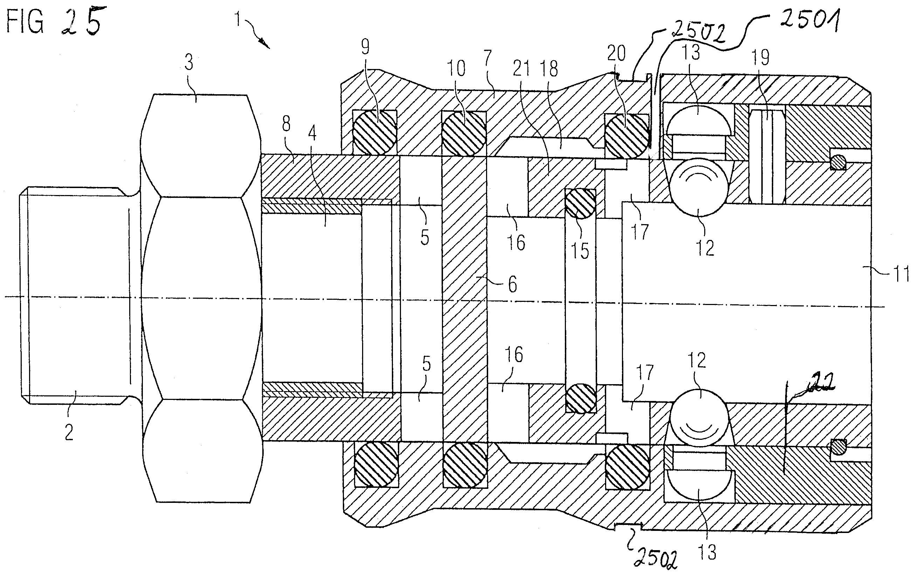

Figur 25 zeigt eine weitere alternative Ausgestaltung eines Entlüftungskanals 2501. Dieser Entlüftungskanal 2501 ist durch die Wand des wenigstens einen Betätigungselementes 7 hindurchgeführt.

Im Übrigen entspricht die Darstellung der Figur 25 im Wesentlichen der Darstellung der Figur 1. Abweichend von der Darstellung der Figur 1 ist in der Darstellung der Figur 25 zu sehen, dass die Nut 2502 in der äußeren Oberfläche des wenigstens einen Betätigungselementes 7 gegenüber der Darstellung der Figur 1 versetzt ist. Durch diese Lage der Nut 2502 ist es möglich, in einer Ausgestaltung mit einem Abluftkanal nach den Figuren 23 und 24 diesen Abluftkanal so mittels der Nut 2502 gegenüber dem Zuführanschlussteil abzudichten, dass die Öffnung des Entlüftungskanals 2501 innerhalb dieses Abluftkanals liegt.

Dabei ist ersichtlich, dass die Entlüftungskanäle nach den Figuren 4, 22 und 25 auch miteinander kombiniert werden können. Dadurch lässt sich vorteilhaft der Querschnitt der Entlüftungskanäle vergrößern.

## Patentansprüche

1. Zuführanschlussteil (1), wobei das Zuführanschlussteil (1) Verbindungsmittel (2) aufweist zur Verbindung des Zuführanschlussteils (1) mit einer Zuführvorrichtung für gasförmige Medien, wobei das Zuführanschlussteil (1) Aufnahmemittel (11) aufweist zur Aufnahme eines Gegenanschlussteils, wobei das Zuführanschlussteil (1) wenigstens ein Betätigungselement (7) aufweist, wobei die Aufnahmemittel (11) Blockademittel (12) aufweisen, wobei in einer ersten Position des wenigstens einen Betätigungselementes (7) die Blockademittel (12) der Aufnahmemittel (11) des Zuführanschlussteils (1) ein mechanisches Lösen eines in die Aufnahmemittel (11) eingesetzten Gegenanschlussteils durch eine formschlüssige Halterung des Gegenanschlussteils verhindern, wobei in dieser ersten Position weiterhin Durchlassmittel geöffnet sind (5, 18, 16) zur Abgabe des gasförmigen Mediums über das Zuführanschlussteil (1) in ein eingesetztes Gegenanschlussteil, wobei in einer zweiten Position des wenigstens einen Betätigungselementes (7) das Zuführanschlussteil (1) gegen eine Abgabe des gasförmigen Mediums gesperrt ist (5, 6, 9, 10) und die Blockademittel (12) der Aufnahmemittel (11) gelöst sind (12, 13, 301; 12, 501, 502; 12, 601, 602; 12, 801, 802; 12, 1101; 12, 1401, 1402, 1403), wobei das wenigstens eine Betätigungsmittel (7) eine Zwischenposition aufweist, in der das Zuführanschlussteil (1) gegen eine Abgabe des gasförmigen Mediums gesperrt ist (5, 6, 9, 10), wobei weiterhin die Blockademittel (12) der Aufnahmemittel (11) des Zuführanschlussteils (1) ein mechanisches Lösen eines in die Aufnahmemittel (11) eingesetzten Gegenanschlussteils durch eine formschlüssige Halterung des Gegenanschlussteils verhindern (12, 302; 12, 1404; 12, 1102) und wobei ein in die Aufnahmemittel (11) eingesetztes Gegenanschlussteil mit der umgebenden Atmosphäre verbunden ist (16, 18, 17, 19, 20), wobei das Zuführanschlussteil (1) wenigstens einen Entlüftungskanal (16, 18, 17, 403, 2203, 2501) aufweist, wobei in der genannten Zwischenposition ein in das Zuführanschlussteil (1) eingesetztes Gegenanschlussteil über den wenigstens einen Entlüftungskanal (16, 18, 17, 403, 2203, 2501) mit der umgebenden Atmosphäre verbunden ist, wobei dieser wenigstens eine Entlüftungskanal (16, 18, 17, 403, 2203, 2501)
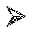 teilweise (403) zwischen der Innenseite der Aufnahme des Gegenanschlussteils in dem Zuführanschlussteil (1) und dem in das Zuführanschlussteil (1) eingesetzten Gegenanschlussteil verläuft und/oder
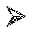 teilweise (2203) zwischen der äußeren Oberfläche des Zuführanschlussteils (1) und dem wenigstens einen Betätigungselement (7) verläuft und/oder
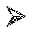 teilweise (2501) durch das wenigstens eine Betätigungselement (7) hindurch verläuft,
wobei wenigstens ein weiteres Blockademittel (2001) vorhanden ist, das bei einem Druck oberhalb eines Schwellwertes in dem Gegenanschlussteil zumindest in der Zwischenposition form- und oder kraftschlüssig in einer Sicherungsposition gehalten wird (2001, 2004), so dass eine Bewegung des wenigstens einen Betätigungselementes (7) aus dieser Zwischenposition in die zweite Position verhindert wird, wobei der Druck oberhalb des Schwellwertes das Blockademittel (2001) entgegen einer Federkraft (2003) in der Sicherungsposition hält, wobei bei Unterschreiten des Schwellwertes des Drucks in dem Gegenanschlussteil das Blockademittel (2001) durch die Federkraft (2003) aus der Sicherungsposition herausbewegt wird, so dass eine Bewegung des wenigstens einen Betätigungselementes (7) aus der Zwischenposition in die zweite Position ermöglicht wird, wobei das weitere Blockademittel (2001) als Differenzkolben ausgebildet ist, der zwei unterschiedlich große Flächen aufweist, die sich einander gegenüberliegen und mit demselben Druck in dem Gegenanschlussteil beaufschlagt werden.

2. Zuführanschlussteil (1) nach Anspruch 1,
**dadurch gekennzeichnet, dass** in der zweiten Position ein in das Zuführanschlussteil (1) eingesetztes Gegenanschlussteil lediglich durch federelastisch gelagerte Haltemittel gehalten wird (12, 13, 301; 12, 501, 502; 12, 601, 602; 12, 801, 802; 12, 1101; 12, 1401, 1402, 1403).

3. Steckanschluss bestehend aus einem Zuführanschlussteil (1) gemäß Anspruch 1 und einem kompatiblen Gegenanschlussteil, wobei das Zuführanschlussteil (1) und das Gegenanschlussteil zur Ausbildung des Steckanschlusses miteinander verbindbar sind, wobei bei hergestellter Verbindung des Steckanschlusses gasförmige Medien durch den Steckanschluss förderbar sind, wobei das Zuführanschlussteil (1) wenigstens ein Betätigungselement (7) aufweist, wobei in einer ersten Position des wenigstens einen Betätigungselementes (7) das gasförmige Medium durch den Steckanschluss förderbar ist, wobei in dieser ersten Position des Betätigungselementes (7) das Zuführanschlussteil und das kompatible Gegenanschlussteil formschlüssig miteinander verbunden sind (12, 302; 12, 1404; 12, 1102), wobei in einer zweiten Position des wenigstens einen Betätigungselementes (7) der Zuführanschluss des gasförmigen Mediums gesperrt ist (5, 6, 9, 10) und wobei in dieser zweiten Position des wenigstens einen Betätigungselementes (7) das Gegenanschlussteil nicht mehr formschlüssig mit dem Zuführanschlussteil (1) verbunden ist (12, 13, 301; 12, 501, 502; 12, 601, 602; 12, 801, 802; 12, 1101; 12, 1401, 1402, 1403), wobei in einer Zwischenposition des wenigstens einen Betätigungselementes (7) zwischen der ersten Position und der zweiten Position der Zuführanschluss des gasförmigen Mediums gesperrt ist (5, 6, 9, 10) und das Gegenanschlussteil gegenüber der umgebenden Atmosphäre geöffnet ist (16, 17, 18, 19, 20), wobei das Zuführanschlussteil (1) und das Gegenanschlussteil in dieser Zwischenposition formschlüssig miteinander verbunden sind (12, 302; 12, 1404; 12, 1102), wobei der Steckanschluss wenigstens einen Entlüftungskanal (16, 18, 17, 403, 2203, 2501) aufweist, wobei in der genannten Zwischenposition des wenigstens einen Betätigungselementes (7) das Gegenanschlussteil über den wenigstens einen Entlüftungskanal (16, 18, 17, 403, 2203, 2501) mit der umgebenden Atmosphäre verbunden ist, wobei dieser wenigstens eine Entlüftungskanal (16, 18, 17, 403, 2203, 2501)
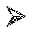 teilweise (403) zwischen der Innenseite der Aufnahme des Gegenanschlussteils in dem Zuführanschlussteil (1) und dem Gegenanschlussteil verläuft und/oder
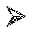 teilweise (2203) zwischen der äußeren Oberfläche des Zuführanschlussteils (1) und dem wenigstens einen Betätigungselement (7) verläuft und/oder
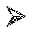 teilweise (2501) durch das wenigstens eine Betätigungselement (7) hindurch verläuft.
wobei wenigstens ein Blockademittel (2001) vorhanden ist, das bei einem Druck oberhalb eines Schwellwertes in dem Gegenanschlussteil zumindest in der Zwischenposition form- und oder kraftschlüssig in einer Sicherungsposition gehalten wird (2001, 2004), so dass eine Bewegung des wenigstens einen Betätigungselementes (7) aus dieser Zwischenposition in die zweite Position verhindert wird, wobei der Druck oberhalb des Schwellwertes das Blockademittel (2001) entgegen einer Federkraft (2003) in der Sicherungsposition hält, wobei bei Unterschreiten des Schwellwertes des Drucks in dem Gegenanschlussteil das Blockademittel (2001) durch die Federkraft (2003) aus der Sicherungsposition herausbewegt wird, so dass eine Bewegung des wenigstens einen Betätigungselementes (7) aus der Zwischenposition in die zweite Position ermöglicht wird.

4. Steckanschluss nach Anspruch 3,
**dadurch gekennzeichnet, dass** in der zweiten Position das Gegenanschlussteil mit dem Zuführanschlussteil (1) lediglich insoweit verbunden ist, dass das Gegenanschlussteil durch federelastisch gelagerte Haltemittel gehalten wird (12, 13, 301; 12, 501, 502; 12, 601, 602; 12, 801, 802; 12, 1101; 12, 1401, 1402, 1403).

5. Steckanschluss bzw. Zuführanschlussteil nach einem der Ansprüche 1 bis 4,
**dadurch gekennzeichnet, dass** von dem Zuführanschlussteil (1) ausgehend ein Abluftkanal (2304) vorhanden ist, der eine Abluftöffnung (2307) aufweist sowie eine Eingangsöffnung (2306) für ein Gegenanschlussteil (2301) mit einem Schlauch (2302), wobei der Abluftkanal (2304) gegenüber dem Zuführanschlussteil (1) für die austretende Abluft beim Druckabbau in der Verbraucherleitung in der Zwischenposition abgedichtet ist sowie gegenüber dem mit dem Gegenanschlussteil verbundenen Schlauch (2302), wobei weiterhin die Öffnung des wenigstens einen Entlüftungskanals (16; 18; 17; 403, 2203, 2501) in dem Abluftkanal (2304) liegt.

6. Steckanschluss bzw. Zuführanschlussteil nach einem der Ansprüche 1 bis 4,
**dadurch gekennzeichnet, dass** von dem Zuführanschlussteil (1) ausgehend ein Abluftkanal (2304) vorhanden ist, der eine Abluftöffnung (2307) aufweist sowie eine Eingangsöffnung (2306) für ein Gegenanschlussteil (2301), wobei der Abluftkanal (2304) gegenüber dem Zuführanschlussteil (1) für die austretende Abluft beim Druckabbau in der Verbraucherleitung in der Zwischenposition abgedichtet ist sowie gegenüber dem Gegenanschlussteil, wobei weiterhin die Öffnung des wenigstens einen Entlüftungskanals (16; 18; 17; 403, 2203, 2501) in dem Abluftkanal (2304) liegt.

## Claims

1. Feed connection part (1), wherein the feed connection part (1) comprises connection means (2) for connecting the feed connection part (1) to a feed device for gaseous media, wherein the feed connection part (1) comprises receiving means (11) for receiving a mating connection part, wherein the feed connection part (1) comprises at least one actuating element (7), wherein the receiving means (11) comprise blocking means (12), wherein, in a first position of the at least one actuating element (7), the blocking means (12) of the receiving means (11) of the feed connection part (1) prevents a mating connection part that is inserted into the receiving means (11) from becoming mechanically detached by means of retaining the mating connection part in a positive-locking manner, wherein in this first position furthermore passage means are open (5, 18, 16) so as to discharge the gaseous medium by way of the feed connection part (1) into an inserted mating connection part, wherein, in a second position of the at least one actuating element (7), the feed connection part (1) is blocked against discharging the gaseous medium (5, 6, 9, 10) and the blocking means (12) of the receiving means (11) are released (12, 13, 301; 12, 501, 502; 12, 601, 602; 12, 801, 802; 12, 1101; 12, 1401, 1402, 1403), wherein the at least one actuating means (7) comprises an intermediate position in which the feed connection part (1) is blocked against discharging the gaseous medium (5, 6, 9, 10), wherein furthermore the blocking means (12) of the receiving medium (11) of the feed connection part (1) prevents a mating connection part that is inserted into the receiving means (11) from becoming mechanically detached by means of retaining the mating connection part in a positive-locking manner (12, 302; 12, 1404; 12, 1102) and wherein a mating connection part that is inserted into the receiving means (11) is connected to the surrounding atmosphere (16, 18, 17, 19, 20), wherein the feed connection part (1) comprises at least one venting duct (16, 18, 17, 403, 2203, 2501), wherein in the said intermediate position a mating connection part that is inserted into the feed connection part (1) is connected by way of the at least one venting duct (16, 18, 17, 403, 2203, 2501) to the surrounding atmosphere, wherein this at least one venting duct (16, 18, 17, 403, 2203, 2501)
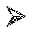 extends in part (403) between the inner face of the receiving device of the mating connection part in the feed connection part (1) and the mating connection part that is inserted into the feed connection part (1) and/or
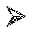 extends in part (2203) between the outer surface of the feed connection part (1) and the at least one actuating element (7) and/or
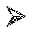 extends in part (2501) through the at least one actuating element (7),
wherein at least a further blocking means (2001) is provided that in the case of a pressure above a threshold value in the mating connection part is maintained at least in the intermediate position in a positive-locking manner and/or non-positive locking manner in a securing position (2001, 2004) with the result that a movement of the at least one actuating element (7) out of this intermediate position into the second position is prevented, wherein the pressure above the threshold value holds the blocking means (2001) in the securing position against a spring force (2003), wherein, in the case of a pressure below the threshold value of the pressure in the mating connection part, the blocking means (2001) is moved by means of the spring force (2003) out of the securing position with the result that a movement of the at least one actuating element (7) out of the intermediate position into the second position is rendered possible, wherein the further blocking means (2001) is embodied as a differential piston that comprises two surface areas that are of different sizes, lie opposite one another and are influenced with the same pressure in the mating connection part.

2. Feed connection part (1) according to Claim 1,
**characterized in that** in the second position a mating connection part that is inserted into the feed connection part (1) is only held by means of spring-elastically mounted retaining means (12, 13, 301; 12, 501, 502; 12, 601, 602; 12, 801, 802; 12, 1101; 12, 1401, 1402, 1403).

3. Plug connection comprising a feed connection part (1) according to Claim 1 and a compatible mating connection part, wherein the feed connection part (1) and the mating connection part can be connected to one another so as to form the plug connection, wherein, when the plug connection is in the connected state, gaseous media can be conveyed by means of the plug connection, wherein the feed connection part (1) comprises at least one actuating element (7), wherein in a first position of the at least one actuating element (7) the gaseous medium can be conveyed by means of the plug connection, wherein, in this first position of the actuating element (7), the feed connection part and the compatible mating connection part are connected to one another in a positive-locking manner (12, 302; 12, 1404; 12, 1102), wherein, in a second position of the at least one actuating element (7), the feed connection of the gaseous medium is blocked (5, 6, 9, 10) and wherein, in this second position of the at least one actuating element (7), the mating connection part is no longer connected to the feed connection part (1) in a positive-locking manner (12, 13, 301; 12, 501, 502; 12, 601, 602; 12, 801, 802; 12, 1101; 12, 1401, 1402 1403), wherein, in an intermediate position of the at least one actuating element (7) between the first position and the second position, the feed connection of the gaseous medium is blocked (5, 6, 9, 10) and the mating connection part is open with respect to the surrounding atmosphere (16, 17, 18, 19, 20), wherein in this intermediate position the feed connection part (1) and the mating connection part are connected to one another in a positive-locking manner (12, 302; 12, 1404; 12, 1102), wherein the plug connection comprises at least one venting duct (16, 18, 17, 403, 2203, 2501), wherein, in the said intermediate position of the at least one actuating element (7), the mating connection part is connected to the surrounding atmosphere by way of the at least one venting duct (16, 18, 17, 403, 2203, 2501), wherein this at least one venting duct (16, 18, 17, 403, 2203, 2501)
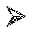 extends in part (403) between the inner face of the receiving device of the mating connection part in the feed connection part (1) and the mating connection part and/or
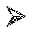 extends in part (2203) between the outer surface of the feed connection part (1) and the at least one actuating element (7) and/or
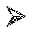 extends in part (2501) through the at least one actuating element (7).
wherein at least one blocking means (2001) is provided that in the case of a pressure above a threshold value in the mating connection part is held at least in the intermediate position in a positive-locking manner and/or non-positive locking manner in a securing position (2001, 2004) with the result that a movement of the at least one actuating element (7) out of this intermediate position into the second position is prevented, wherein the pressure above the threshold value holds the blocking means (2001) against a spring force (2003) in the securing position, wherein, in the case of a pressure below the threshold value of the pressure in the mating connecting part, the blocking part (2001) is moved by means of the spring force (2003) out of the securing position with the result that a movement of the at least one actuating element (7) out of the intermediate position into the second position is rendered possible.

4. Plug connection according to Claim 3,
**characterized in that** in the second position the mating connection part is only connected to the feed connection part (1) in so far as the mating connection part is held by means of the spring-elastically mounted retaining means (12, 13, 301; 12, 501, 502; 12, 601, 602; 12, 801, 802; 12, 1101; 12, 1401, 1402, 1403).

5. Plug connection or feed connection part according to one of Claims 1 to 4, **characterized in that** an exhaust air duct (2304) is provided leading off from the feed connection part (1) and said exhaust air duct comprises an exhaust gas opening (2307) and an inlet opening (2306) for a mating connection part (2301) having a hose (2302), wherein in the intermediate position the exhaust air duct (2304) is sealed with respect to the feed connection part (1) for the exiting exhaust air as the pressure drops in the consumer line and also with respect to the hose (2302) that is connected to the mating connection part, wherein furthermore the opening of the at least one venting duct (16, 18; 17; 403, 2203, 2501) lies in the exhaust air duct (2304).

6. Plug connection or feed connection part according to one of Claims 1 to 4, **characterized in that** an exhaust air duct (2304) is provided leading off from the feed connection part (1), which exhaust air duct comprises an exhaust gas opening (2307) and an inlet opening (2306) for a mating connection part (2301), wherein in the intermediate position the exhaust air duct (2304) is sealed with respect to the feed connection part (1) for the exiting exhaust air as the pressure drops in the consumer line and with respect to the mating connection part, wherein furthermore the opening of the at least one venting duct (16; 18; 17; 403, 2203, 2501) lies in the exhaust air duct (2304).

## Revendications

1. Élément de raccordement d'alimentation (1), l'élément de raccordement d'alimentation (1) étant muni de moyens de liaison (2) pour relier l'élément de raccordement d'alimentation (1) à un dispositif d'alimentation pour des milieux gazeux, l'élément de raccordement d'alimentation (1) étant muni de moyens de réception (11) pour recevoir un élément de raccordement complémentaire, l'élément de raccordement d'alimentation (1) étant muni d'au moins un élément d'actionnement (7), les moyens de réception (11) étant munis de moyens de blocage (12), les moyens de blocage (12) des moyens de réception (11) de l'élément de raccordement d'alimentation (1) empêchant, dans une première position dudit au moins un élément d'actionnement (7), un détachement mécanique d'un élément de raccordement complémentaire inséré dans les moyens de réception (11) par un maintien par conjugaison de forme de l'élément de raccordement complémentaire, des moyens de passage étant en outre ouverts (5, 18, 16), dans cette première position, pour délivrer le milieu gazeux via l'élément de raccordement d'alimentation (1) à un élément de raccordement complémentaire inséré, l'élément de raccordement d'alimentation (1), dans une deuxième position dudit au moins un élément d'actionnement (7), étant empêché (5, 6, 9, 10) de délivrer le milieu gazeux et les moyens de blocage (12) des moyens de réception (11) étant libérés (12, 13, 301 ; 12, 501, 502 ; 12, 601, 602 ; 12, 801, 802 ; 12, 1101 ; 12, 1401, 1402, 1403), ledit au moins un élément d'actionnement (7) présentant une position intermédiaire dans laquelle l'élément de raccordement d'alimentation (1) est empêché (5, 6, 9, 10) de délivrer le milieu gazeux, les moyens de blocage (12) des moyens de réception (11) de l'élément de raccordement d'alimentation (1) empêchant (12, 302 ; 12, 1404 ; 12, 1102) en outre un détachement mécanique d'un élément de raccordement complémentaire inséré dans les moyens de réception (11) par un maintien par conjugaison de formes de l'élément de raccordement complémentaire, et un élément de raccordement complémentaire inséré dans les moyens de réception (11) étant reliée (16, 18, 17, 19, 20) à l'atmosphère ambiante, l'élément de raccordement d'alimentation (1) présentant au moins un canal d'évent (16, 18, 17, 403, 2203, 2501), un élément de raccordement complémentaire inséré dans l'élément de raccordement d'alimentation (1) étant reliée, dans ladite position intermédiaire, à l'atmosphère ambiante par l'intermédiaire dudit au moins un canal d'évent (16, 18, 17, 403, 2203, 2501), ledit au moins un canal d'évent (16, 18, 17, 403, 2203, 2501)
- s'étendant partiellement (403) entre la face intérieure du logement de l'élément de raccordement complémentaire dans l'élément de raccordement d'alimentation (1) et l'élément de raccordement complémentaire insérée dans l'élément de raccordement d'alimentation (1), et/ou
- s'étendant partiellement (2203) entre la surface extérieure de l'élément de raccordement d'alimentation (1) et ledit au moins un élément d'actionnement (7), et/ou
- s'étendant partiellement (2501) à travers ledit au moins un élément d'actionnement (7), au moins un autre moyen de blocage (2001) étant présent, lequel, en cas de pression supérieure à une valeur seuil dans l'élément de raccordement complémentaire, est maintenu (2001, 2004) dans une position de sécurité par conjugaison de forme et/ou par friction au moins dans la position intermédiaire, de sorte qu'un déplacement dudit au moins un élément d'actionnement (7) de cette position intermédiaire dans la deuxième position est empêché, la pression supérieure à la valeur seuil maintenant dans la position de sécurité le moyen de blocage (2001) contre une force de ressort (2003), le moyen de blocage (2001) étant écarté de la position de sécurité par la force de ressort (2003) lorsque la pression dans l'élément de raccordement complémentaire tombe en dessous de la valeur seuil, de sorte qu'un déplacement dudit au moins un élément d'actionnement (7) de la position intermédiaire à la deuxième position est possible, l'autre moyen de blocage (2001) étant conçu comme un piston différentiel qui présente deux surfaces de tailles différentes qui sont opposées l'une à l'autre et qui sont soumises à la même pression dans l'élément de raccordement complémentaire.

2. Élément de raccordement d'alimentation (1) selon la revendication 1, **caractérisé en ce que** dans la deuxième position, un élément de raccordement complémentaire inséré dans l'élément de raccordement d'alimentation (1) est maintenu (12, 13, 301 ; 12, 501, 502 ; 12, 601, 602 ; 12, 801, 802 ; 12, 1101 ; 12, 1401, 1402, 1403) uniquement par des moyens de maintien logés déformables élastiquement.

3. Raccord enfichable composé d'un élément de raccordement d'alimentation (1) selon la revendication 1 et d'un élément de raccordement complémentaire compatible, l'élément de raccordement d'alimentation (1) et l'élément de raccordement complémentaire pouvant être reliés ensemble pour former le raccord enfichable, des milieux gazeux pouvant être transportés à travers le raccord enfichable lorsque celui-ci est établi, l'élément de raccordement d'alimentation (1) présentant au moins un élément d'actionnement (7), le fluide gazeux pouvant être acheminé à travers le raccord enfichable dans une première position dudit au moins un élément d'actionnement (7), l'élément de raccordement d'alimentation et l'élément de raccordement complémentaire compatible étant reliés ensemble par conjugaison de forme (12, 302 ; 12, 1404 ; 12, 1102) dans cette première position de l'élément d'actionnement (7), l'alimentation du milieu gazeux étant bloquée (5, 6, 9, 10) dans une deuxième position dudit au moins un élément d'actionnement (7), et l'élément de raccordement complémentaire n'étant plus relié par conjugaison de forme (12, 13, 301 ; 12, 501, 502 ; 12, 601, 602 ; 12, 801, 802 ; 12, 1101 ; 12, 1401, 1402, 1403) à l'élément de raccordement d'alimentation (1) dans cette deuxième position dudit au moins un élément d'actionnement (7), le raccord d'alimentation du milieu gazeux étant bloqué (5, 6, 9, 10) et l'élément de raccordement complémentaire étant ouvert (16, 17, 18, 19, 20) par rapport à l'atmosphère ambiante dans une position intermédiaire dudit au moins un élément d'actionnement (7) entre la première position et la deuxième position, l'élément de raccordement d'alimentation (1) et l'élément de raccordement complémentaire étant reliés ensemble par conjugaison de forme (12, 302 ; 12, 1404 ; 12, 1102) dans cette position intermédiaire, le raccord enfichable présentant au moins un canal d'évent (16, 18, 17, 403, 2203, 2501), l'élément de raccordement complémentaire étant relié à l'atmosphère ambiante par l'intermédiaire dudit au moins un canal d'évent (16, 18, 17, 403, 2203, 2501) dans ladite position intermédiaire dudit moins un élément d'actionnement (7), cet au moins un canal d'évent (16, 18, 17, 403, 2203, 2501)
- s'étendant partiellement (403) entre la face intérieure du logement de l'élément de raccordement complémentaire dans l'élément de raccordement d'alimentation (1) et l'élément de raccordement complémentaire, et/ou
- s'étendant partiellement (2203) entre la surface extérieure de l'élément de raccordement d'alimentation (1) et ledit au moins un élément d'actionnement (7), et/ou
- s'étendant partiellement (2501) à travers ledit au moins un élément d'actionnement (7), au moins un moyen de blocage (2001) étant présent, lequel, en cas de pression supérieure à une valeur seuil dans l'élément de raccordement complémentaire, est maintenu (2001, 2004) dans une position de sécurité par conjugaison de forme et/ou par friction au moins dans la position intermédiaire, de sorte qu'un déplacement dudit au moins un élément d'actionnement (7) de cette position intermédiaire dans la deuxième position est empêché, la pression supérieure à la valeur seuil maintenant dans la position de sécurité le moyen de blocage (2001) contre une force de ressort (2003), le moyen de blocage (2001) étant écarté de de la position de sécurité par la force de ressort (2003) lorsque la pression dans l'élément de raccordement complémentaire tombe en dessous de la valeur seuil, de sorte qu'un déplacement dudit au moins un élément d'actionnement (7) de la position intermédiaire à la deuxième position est rendu possible.

4. Raccord enfichable selon la revendication 3, **caractérisé en ce que** dans la deuxième position, l'élément de raccordement complémentaire n'est relié à l'élément de raccordement d'alimentation (1) que dans la mesure où l'élément de raccordement complémentaire est maintenu (12, 13, 301 ; 12, 501, 502 ; 12, 601, 602 ; 12, 801, 802 ; 12, 1101 ; 12, 1401, 1402, 1403) par des moyens de maintien logés déformables élastiquement.

5. Raccord enfichable ou élément de raccordement d'alimentation selon l'une des revendications 1 à 4, **caractérisé en ce qu'**il est prévu un canal d'évacuation d'air (2304) partant de l'élément de raccordement d'alimentation (1), lequel canal présente une ouverture d'évacuation d'air (2307) et une ouverture d'entrée (2306) pour un élément de raccordement complémentaire (2301) avec un tuyau (2302), le canal d'évacuation d'air (2304) étant, dans la position intermédiaire, isolé de l'élément de raccordement d'alimentation (1) en ce qui concerne l'air d'évacuation qui s'échappe lors de la réduction de pression dans la conduite du consommateur, ainsi que du tuyau (2302) relié à l'élément de raccordement complémentaire, l'ouverture dudit au moins un canal d'évent (16 ; 18 ; 17 ; 403, 2203, 2501) se trouvant dans le canal d'évacuation d'air (2304).

6. Raccord enfichable ou élément de raccordement d'alimentation selon l'une des revendications 1 à 4, **caractérisé en ce qu'**il est prévu un canal d'évacuation d'air (2304) partant de l'élément de raccordement d'alimentation (1), lequel canal présente une ouverture d'évacuation (2307) et une ouverture d'entrée (2306) pour un élément de raccordement complémentaire (2301), le canal d'évacuation d'air (2304) étant, dans la position intermédiaire, isolé de l'élément de raccordement d'alimentation (1) en ce qui concerne l'air d'évacuation qui s'échappe lors de la réduction de pression dans la conduite du consommateur, ainsi que de l'élément de raccordement complémentaire, l'ouverture dudit au moins un canal d'évent (16 ; 18 ; 17 ; 403, 2203, 2501) se trouve en outre dans le canal d'évacuation d'air (2304).
